# EUROPEAN PATENT APPLICATION

(11) **EP 4 556 300 A1**
(43) Date of publication of application: **21.05.2025**
(21) Application number: 24213008.6
(22) Date of filing: 14.11.2024
(51) Int. Cl.: B60L 53/12, B60L 53/10, B60L 53/14, H02J 7/00

(54) **POWER ALLOCATION APPARATUS AND CHARGING DEVICE**

(30) Priority: 17.11.2023 CN 202311545068
(71) Applicant: Huawei Digital Power Technologies Co., Ltd., Shenzhen, Guangdong 518043 (CN)
(72) Inventor: Han, Xinru, Shenzhen, 518043 (CN); Yin, Boyuan, Shenzhen, 518043 (CN); Deng, Ziming, Shenzhen, 518043 (CN); Wang, Hanlin, Shenzhen, 518043 (CN)
(74) Representative: Gill Jennings & Every LLP

(57) **Abstract**

Embodiments of this application provide a power allocation apparatus and a charging device. The power allocation apparatus includes a plurality of power allocation units and at least one interconnection board. Each power allocation unit includes at least one input end and a plurality of output ends, each input end is configured to connect to a power module, and at least some output ends in the plurality of output ends are configured to connect to an interconnection board. The interconnection board is connected to output ends of at least two power allocation units in the plurality of power allocation units, and is configured to converge powers output by the output ends of the at least two connected power allocation units. In embodiments of this application, a quantity of output ends that are of the power allocation apparatus and that are actually configured to connect to a load can be flexibly adjusted, to meet different demands of different charging scenarios for an output end of the power allocation apparatus.

## Description

### TECHNICAL FIELD

This application relates to the charging field, and more specifically, to a power allocation apparatus and a charging device.

### BACKGROUND

With rapid popularization of new energy vehicles, electric vehicle charging devices used as auxiliary facilities are increasingly widely used. The charging device usually includes a power module and a power allocation apparatus. The power module is configured to convert an alternating current into a direct current applicable to charging an electric vehicle. The power allocation apparatus dynamically allocates the direct current output by the power module to the electric vehicle.

In a current actual application, different charging scenarios usually have different demands for an output end of the power allocation apparatus. For example, in a large charging station scenario, the power allocation apparatus usually needs to simultaneously allocate output powers to a large quantity of electric vehicles. Therefore, there is a large demand for the output end of the power allocation apparatus. In a small charging station scenario, the power allocation apparatus usually needs to simultaneously allocate output powers to a small quantity of electric vehicles. Therefore, there is a small demand for the output end of the power allocation apparatus. However, an output manner of an existing power allocation apparatus is fixed. This cannot better meet the different demands of the different charging scenarios for the output end of the power allocation apparatus.

### SUMMARY

This application provides a power allocation apparatus and a charging device, to flexibly adjust a quantity of output ends that are of the power allocation apparatus and that are actually configured to connect to a load, so as to meet different demands of different charging scenarios for an output end of the power allocation apparatus.

According to a first aspect, a power allocation apparatus is provided. The power allocation apparatus includes a plurality of power allocation units and at least one interconnection board. The power allocation unit includes at least one input end and a plurality of output ends, the input end is configured to connect to a power module, and at least some output ends in the plurality of output ends are configured to connect to an interconnection board. The interconnection board is connected to output ends of at least two power allocation units in the plurality of power allocation units, and the interconnection board is configured to converge powers output by the output ends of the at least two power allocation units.

In the foregoing technical solution, the interconnection board is connected to the output ends of the at least two power allocation units, so that the powers output by the output ends of the at least two power allocation units can be converged by the interconnection board and then output to a load. In other words, the interconnection board can combine the output ends of the at least two power allocation units into one output end, to connect to the load. Therefore, in this embodiment of this application, a quantity of interconnection boards connected to output ends of the plurality of power allocation units may be adjusted, to flexibly adjust a quantity of output ends that are of the plurality of power allocation units and that are actually configured to connect to a load, that is, flexibly adjust a quantity of output ends that are of the power allocation apparatus and that are actually configured to connect to the load, so as to meet different demands of different charging scenarios for the output end of the power allocation apparatus. In addition, in this embodiment of this application, a quantity of power allocation units connected to each interconnection board may be further adjusted, to flexibly adjust a value of a maximum output power that is converged by each interconnection board and then output to a load. This helps meet charging requirements of different loads, and improves flexibility of allocating an output power to a load by the power allocation apparatus.

With reference to the first aspect, in some implementations of the first aspect, the interconnection board includes at least two interconnection board input ends and one interconnection board output end. The at least two interconnection board input ends one-to-one correspond to the at least two power allocation units, the interconnection board input end is connected to one output end of the corresponding power allocation unit, and the interconnection board output end is configured to connect to a load.

In the foregoing technical solution, the at least two interconnection board input ends of the interconnection board are respectively connected to the output ends of the at least two power allocation units, so that powers output by the output ends of the at least two power allocation units can be converged to the interconnection board and further transmitted to the load through the interconnection board output end. That is, the interconnection board can combine the output ends of the at least two power allocation units into the interconnection board output end. In addition, the power allocation units are connected to the load through the interconnection board output end of the interconnection board. Therefore, an overall connection structure is simple, and a normalized design is facilitated.

With reference to the first aspect, in some implementations of the first aspect, the interconnection board includes at least two interconnection board input ends. The at least two interconnection board input ends one-to-one correspond to the at least two power allocation units, and the interconnection board input end is connected to one output end of the corresponding power allocation unit. An output end of any power allocation unit connected to the at least two interconnection board input ends is configured to connect to a load.

In the foregoing technical solution, the at least two interconnection board input ends of the interconnection board are respectively connected to the output ends of the at least two power allocation units, so that powers output by the output ends of the at least two power allocation units can be converged to an output end of one of the power allocation units through the interconnection board and further transmitted to the load through the output end of one of the power allocation units. That is, the interconnection board can combine the output ends of the at least two power allocation units into the output end of one of the power allocation units. In addition, only the interconnection board input end configured to connect to the output end of the power allocation unit needs to be disposed on the interconnection board. Therefore, an overall structure of the interconnection board is simple, and processing is facilitated.

With reference to the first aspect, in some implementations of the first aspect, the at least one interconnection board includes a plurality of interconnection boards. At least two interconnection boards in the plurality of interconnection boards are one-to-one connected to at least two output ends of one of the power allocation units, and each of the at least two interconnection boards is further connected to an output end of a power allocation unit other than the one power allocation unit in the plurality of power allocation units.

In the foregoing technical solution, because the at least two interconnection boards connected to different output ends of a same power allocation unit are further respectively connected to output ends of different power allocation units, the at least two interconnection boards can simultaneously converge a power output by the output ends of the same power allocation unit and powers output by output ends of at least two other different power allocation units. Compared with a solution in which the power allocation units connected to the at least two interconnection boards are completely the same, the foregoing technical solution is more conducive to increasing a value of a total power that is simultaneously converged by the at least two interconnection boards and output to a load, thereby increasing power utilization of the power module connected to the power allocation apparatus.

With reference to the first aspect, in some implementations of the first aspect, the power allocation apparatus further includes a first switch unit, and any two output ends in the at least two output ends are connected to each other through the first switch unit. The first switch unit is configured to disconnect or connect a power transmission path between two interconnection boards connected to the any two output ends.

In the foregoing technical solution, a power transmission path between any two output ends of one power allocation unit is connected through the first switch unit, so that power transmission can be performed through the connected power transmission path and between two interconnection boards connected to the any two output ends. Therefore, a power converged by one interconnection board is scheduled to the other interconnection board. Because the two interconnection boards connected to the any two output ends are respectively connected to output ends of other different power allocation units, in addition to converging a power output by the output end of the power allocation unit that is connected to the other interconnection board, the other interconnection board may further converge a power output by an output end of a power allocation unit that is not connected to the other interconnection board. This can increase a value of a maximum output power that is converged by the other interconnection board and then output to a load, further helps meet charging requirements of different loads, and improves flexibility of allocating an output power to a load by the power allocation apparatus.

With reference to the first aspect, in some implementations of the first aspect, the plurality of power allocation units include a first power allocation unit; and each input end of the first power allocation unit is directly connected to at least some output ends of the first power allocation unit.

It may be understood that, in this embodiment of this application, direct connection may mean that no switch is disposed between each input end and at least some output ends of the first power allocation unit, and the input end is directly connected to the at least some output ends through a cable or a copper bar.

In the foregoing technical solution, each input end of the first power allocation unit is directly connected to at least some output ends in the plurality of output ends, so that the first power allocation unit outputs a power through a specified output end in the at least some output ends in an actual application. This reduces a quantity of output ends that are of the first power allocation unit and that are actually configured to connect to a load. Therefore, in this embodiment of this application, some power allocation units may be disposed as first power allocation units without reducing a quantity of a plurality of power allocation units, that is, without reducing a quantity of power modules connected to the power allocation apparatus, to reduce the quantity of output ends that are of the plurality of power allocation units and that are actually configured to connect to the load. Further, an output end, that is actually configured to connect to a load, of a first power allocation unit is connected to an output end of another power allocation unit through an interconnection board, so that the quantity of output ends that are of the plurality of power allocation units and that actually configured to connect to the load can be further reduced. In this way, the quantity of output ends that are of the power allocation apparatus and that actually configured to connect to the load meets a small demand for an output end in a case in which an entire power of a power module connected to the power allocation apparatus remains unchanged.

In addition, compared with an allocation matrix architecture in which each input end and each output end of each power allocation unit in the power allocation apparatus are connected to each other through a switch, in the foregoing technical solution, no switch needs to be disposed between each input end and each output end of the first power allocation unit in the power allocation apparatus. This can reduce a quantity of required switches in the power allocation apparatus, further reduces a volume of the power allocation apparatus, and reduces costs of the power allocation apparatus.

With reference to the first aspect, in some implementations of the first aspect, all of the plurality of power allocation units have a quantity of a plurality of output ends.

In the foregoing technical solution, quantities of output ends of all of the plurality of power allocation units are set to be the same. This facilitates a modular design of the plurality of power allocation units, and further reduces complexity of designing the power allocation apparatus.

With reference to the first aspect, in some implementations of the first aspect, that each input end of the first power allocation unit is directly connected to at least some output ends of the first power allocation unit includes: Each input end of the first power allocation unit is directly connected to each output end of the first power allocation unit.

In the foregoing technical solution, each input end of the first power allocation unit is directly connected to each output end of the first power allocation unit, so that each output end of the first power allocation unit can output a power. Therefore, in an actual application, the first power allocation unit may be controlled to output a power to a load through any output end, and the control is simpler and more reliable. In addition, each input end and each output end of the first power allocation unit are directly connected to each other, so that, in an actual application, a maximum output power output by any output end to a load is high. This helps meet a requirement of fast charging the load. In addition, when the output end of the first power allocation unit needs to be connected to an output end of another power allocation unit through an interconnection board, any specified output end of the first power allocation unit may be selected, based on a location of the output end of the another power allocation unit, to connect to the interconnection board. This facilitates a normalized design of the interconnection board.

With reference to the first aspect, in some implementations of the first aspect, the power allocation apparatus further includes a second switch unit. The at least some output ends of the first power allocation unit are configured to connect to the load through the interconnection board, and the at least two interconnection board input ends of the interconnection board connected to the first power allocation unit are connected to the interconnection board output end through the second switch unit. The second switch unit is configured to disconnect or connect a power transmission path between the interconnection board output end and the at least two interconnection board input ends of the interconnection board connected to the first power allocation unit.

In the foregoing technical solution, at least some output ends of the first power allocation unit are configured to connect to an interconnection board input end of an interconnection board, and transmit a power to a load through an interconnection board output end. When an exception occurs when the power is transmitted to the load through the interconnection board, for example, the load is short-circuited, or a power module connected to the first power allocation unit is short-circuited, the power transmission path between the interconnection board input end and the interconnection board output end may be disconnected through the second switch unit, to disconnect a power transmission path between the first power allocation unit and the load. This helps improve security and reliability of the power allocation apparatus.

According to a second aspect, an embodiment of this application provides a charging device. The charging device includes a power module and a power allocation apparatus, and the power allocation apparatus includes a plurality of power allocation units and at least one interconnection board. The power allocation unit includes at least one input end and a plurality of output ends, the input end is connected to the power module, and at least some output ends in the plurality of output ends are configured to connect to an interconnection board. The interconnection board is connected to output ends of at least two power allocation units in the plurality of power allocation units, and the interconnection board is configured to converge powers output by the output ends of the at least two power allocation units.

In the foregoing technical solution, the interconnection board is connected to the output ends of the at least two power allocation units, so that the powers output by the output ends of the at least two power allocation units can be converged by the interconnection board and then output to a load. In other words, the interconnection board can combine the output ends of the at least two power allocation units into one output end, to connect to the load. Therefore, in this embodiment of this application, a quantity of interconnection boards connected to output ends of the plurality of power allocation units may be adjusted, to flexibly adjust a quantity of output ends that are of the plurality of power allocation units and that are actually configured to connect to a load, that is, flexibly adjust a quantity of output ends that are of the power allocation apparatus and that are actually configured to connect to the load, so as to meet different demands of different charging scenarios for the output end of the power allocation apparatus. In addition, in this embodiment of this application, a quantity of power allocation units connected to each interconnection board may be further adjusted, to flexibly adjust a value of a maximum output power that is converged by each interconnection board and then output to a load. This helps meet charging requirements of different loads, and improves flexibility of allocating an output power to a load by the power allocation apparatus.

With reference to the second aspect, in some implementations of the second aspect, the charging device further includes at least one charging connector, and the interconnection board includes at least two interconnection board input ends and one interconnection board output end. The at least two interconnection board input ends one-to-one correspond to the at least two power allocation units, the interconnection board input end is connected to one output end of the corresponding power allocation unit, and the interconnection board output end is configured to connect to a load through the charging connector.

With reference to the second aspect, in some implementations of the second aspect, the charging device further includes at least one charging connector, and the interconnection board includes at least two interconnection board input ends. The at least two interconnection board input ends one-to-one correspond to the at least two power allocation units, and the interconnection board input end is configured to connect to one output end of the corresponding power allocation unit. An output end of any power allocation unit connected to the at least two interconnection board input ends is configured to connect to a load through a charging connector.

With reference to the second aspect, in some implementations of the second aspect, the at least one interconnection board includes a plurality of interconnection boards. At least two interconnection boards in the plurality of interconnection boards are one-to-one connected to at least two output ends of one of the power allocation units, and each of the at least two interconnection boards is further connected to an output end of a power allocation unit other than the one power allocation unit in the plurality of power allocation units.

With reference to the second aspect, in some implementations of the second aspect, the power allocation apparatus further includes a first switch unit, and any two output ends in the at least two output ends are connected to each other through the first switch unit. The first switch unit is configured to disconnect or connect a power transmission path between two interconnection boards connected to the any two output ends.

With reference to the second aspect, in some implementations of the second aspect, the plurality of power allocation units include a first power allocation unit; and each input end of the first power allocation unit is directly connected to at least some output ends of the first power allocation unit.

With reference to the second aspect, in some implementations of the second aspect, all of the plurality of power allocation units have a quantity of a plurality of output ends. Rated output powers of the at least some output ends in the plurality of output ends of the first power allocation unit are the same.

It may be understood that, that rated output powers of at least some output ends are the same may mean that maximum output powers allocated to all of the at least some output ends are the same after the first power allocation unit receives a power output by the power module.

In the foregoing technical solution, quantities of output ends of all of the plurality of power allocation units are set to be the same. This facilitates a modular design of the plurality of power allocation units, and further reduces complexity of designing the power allocation apparatus. In addition, after the first power allocation unit receives the power output by the power module, maximum output powers allocated to all of the at least some output ends of the first power allocation unit are the same. Therefore, in an actual application, the first power allocation unit may be controlled to output the same maximum power to a load through any output end in the at least some output ends, and the control is simple and reliable.

With reference to the second aspect, in some implementations of the second aspect, that each input end of the first power allocation unit is directly connected to at least some output ends of the first power allocation unit includes: Each input end of the first power allocation unit is directly connected to each output end of the first power allocation unit, and rated output powers of all of the plurality of output ends of the first power allocation unit are the same.

In the foregoing technical solution, each input end of the first power allocation unit is directly connected to each output end of the first power allocation unit, so that each output end can output a power. In addition, after the first power allocation unit receives the power output by the power module, maximum output powers allocated to all output ends of the first power allocation unit are the same. Therefore, in an actual application, the first power allocation unit may be controlled to output the same power to a load through any output end, and the control is simpler and more reliable. In addition, each input end and each output end of the first power allocation unit are directly connected to each other, so that, in an actual application, a maximum output power output by any output end to a load is high. This helps meet a requirement of fast charging the load. In addition, when an output end of the first power allocation unit needs to be connected to an output end of another power allocation unit through an interconnection board, any specified output end of the first power allocation unit may be selected, based on a location of the output end of the another power allocation unit, to connect to the interconnection board. This facilitates a normalized design of the interconnection board.

With reference to the second aspect, in some implementations of the second aspect, the power allocation apparatus further includes a second switch unit. The at least some output ends of the first power allocation unit are configured to connect to the charging connector through the interconnection board, and the at least two interconnection board input ends of the interconnection board connected to the first power allocation unit are connected to the interconnection board output end through the second switch unit. The second switch unit is configured to disconnect or connect a power transmission path between the interconnection board output end and the at least two interconnection board input ends of the interconnection board connected to the first power allocation unit.

For beneficial effect that is not described in detail in the second aspect, refer to the beneficial effect in the first aspect. Details are not described herein again.

### BRIEF DESCRIPTION OF DRAWINGS

FIG. 1 is a diagram of a structure of a charging system according to an embodiment of this application;
FIG. 2 is a diagram of a structure of a charging system according to an embodiment of this application;
FIG. 3 is a diagram of an architecture of an example of a charging device according to an embodiment of this application;
FIG. 4 and FIG. 5 are diagrams of a structure of a power allocation apparatus in different views according to an embodiment of this application;
FIG. 6 is a diagram of a structure of an example of connection between a power allocation unit and an interconnection board according to an embodiment of this application;
FIG. 7 is a diagram of a structure of another example of connection between a power allocation unit and an interconnection board according to an embodiment of this application;
FIG. 8 is a diagram of a structure of an example of a power allocation apparatus according to an embodiment of this application;
FIG. 9 is a diagram of a structure of another example of a power allocation apparatus according to an embodiment of this application;
FIG. 10 is a diagram of a structure of an example of a power allocation apparatus according to an embodiment of this application;
FIG. 11 is a diagram of a structure of another example of a power allocation apparatus according to an embodiment of this application;
FIG. 12 is a diagram of a structure of an example of a power allocation apparatus according to an embodiment of this application;
FIG. 13 is a diagram of a partial structure of the power allocation apparatus shown in FIG. 12;
FIG. 14 is a diagram of a structure of an example of a power allocation apparatus according to an embodiment of this application;
FIG. 15 is a diagram of a structure of another example of a power allocation apparatus according to an embodiment of this application;
FIG. 16 is a schematic of a circuit structure of an example of a power allocation unit according to an embodiment of this application;
FIG. 17 is a diagram of a structure of a power allocation apparatus according to an embodiment of this application;
FIG. 18 is a diagram of a structure of an example of a first power allocation unit according to an embodiment of this application;
FIG. 19 is a diagram of a structure of another example of a first power allocation unit according to an embodiment of this application;
FIG. 20 is a diagram of a structure of another example of a first power allocation unit according to an embodiment of this application;
FIG. 21 is a diagram of a structure of an example of a power allocation apparatus according to an embodiment of this application;
FIG. 22 is a diagram of a structure of another example of a power allocation apparatus according to an embodiment of this application;
FIG. 23 is a diagram of a structure of a power allocation apparatus according to an embodiment of this application; and
FIG. 24 is a diagram of a structure of a charging device according to an embodiment of this application.

### DESCRIPTION OF EMBODIMENTS

For ease of understanding of embodiments of this application, the following descriptions are first provided before embodiments of this application are described.

In descriptions of embodiments of this application, "connection" may be electrical connection, and the electrical connection may be understood as a manner of direct electrical connection or indirect electrical connection between two electrical elements to implement signal transmission. For example, that A is connected to B may be understood as that A is directly electrically connected to B, or may be understood as that A is indirectly electrically connected to B through one or more other electrical elements.

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In addition, in the descriptions of embodiments of this application, "a plurality of" means two or more, and "at least one" and "one or more" mean one, two, or more.

The following describes technical solutions of this application with reference to accompanying drawings.

First, for ease of understanding technical solutions provided in embodiments of this application, the following first describes an application scenario to which embodiments of this application are applicable.

The technical solutions provided in embodiments of this application may be applied to a system in which a power supply device charges a load via a power allocation apparatus, for example, may be applied to a charging system including a charging device and an electric vehicle. In the charging system, the charging device may use electric energy from a power grid to charge the electric vehicle.

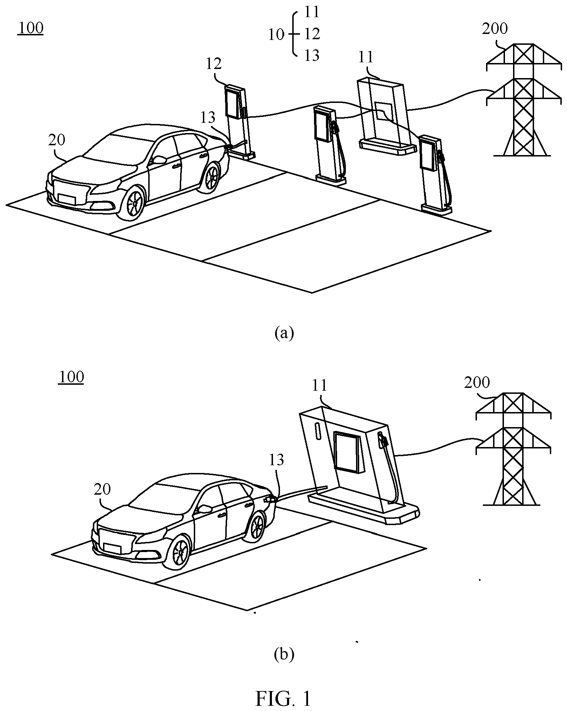

FIG. 1 shows an example of a diagram of a structure of a charging system 100 according to an embodiment of this application.

With reference to (a) and (b) in FIG. 1, the charging system 100 may include a charging device 10 and an electric vehicle 20. The charging device 10 may be configured to: receive an alternating current output by an external power grid 200, convert the alternating current into a stable direct current, and then transmit the stable direct current to the electric vehicle 20, to charge the electric vehicle 20. Alternatively, the electric vehicle 20 may reversely output electric energy to an external power grid 200 via the charging device 10.

In some embodiments, as shown in (a) in FIG. 1, the charging device 10 may be a split-type charging pile. Specifically, the charging device 10 may include a charging power unit 11, at least one charging terminal 12, and at least one charging connector 13. The charging power unit 11 is connected to the at least one charging terminal 12, the at least one charging terminal 12 is connected to the at least one charging connector 13, and each charging connector 13 is configured to connect to an electric vehicle 20. During specific implementation, one charging terminal 12 may be connected to one or more charging connectors 13.

The charging power unit 11 may include a plurality of power conversion apparatuses. The plurality of power conversion apparatuses each may include an alternating current-direct current (alternating current-direct current, AC-DC) conversion apparatus and a direct current-direct current (direct current-direct current, DC-DC) conversion apparatus. The plurality of power conversion apparatuses may convert the alternating current from the external power grid 200 into the stable direct current, and then transmit the stable direct current to the charging terminal 12. The charging terminal 12 may transmit the stable direct current to the electric vehicle 20 via the connected charging connector 13, to charge the electric vehicle 20.

The charging terminal 12 may include a housing, a human-machine interaction interface, a charging control unit, a metering and billing unit, and the like, and is configured to perform information exchange, energy transmission, metering and billing, and the like with the electric vehicle 20.

The electric vehicle 20 may be a transportation means driven by electric energy to travel. The electric vehicle 20 may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, the charging device 10 may be an integrated charging pile. Specifically, in the charging device 10, a human-machine interaction interface, a charging control unit, a metering and billing unit, and the like may be directly disposed in a charging power unit 11, so that the charging device 10 can include only the charging power unit 11 and at least one charging connector 13 connected to the charging power unit 11, and does not include a charging terminal 12. A plurality of power conversion apparatuses in the charging power unit 11 may convert the alternating current from the external power grid 200 into the stable direct current, and then directly transmit the stable direct current to the electric vehicle 20 via the charging connector 13.

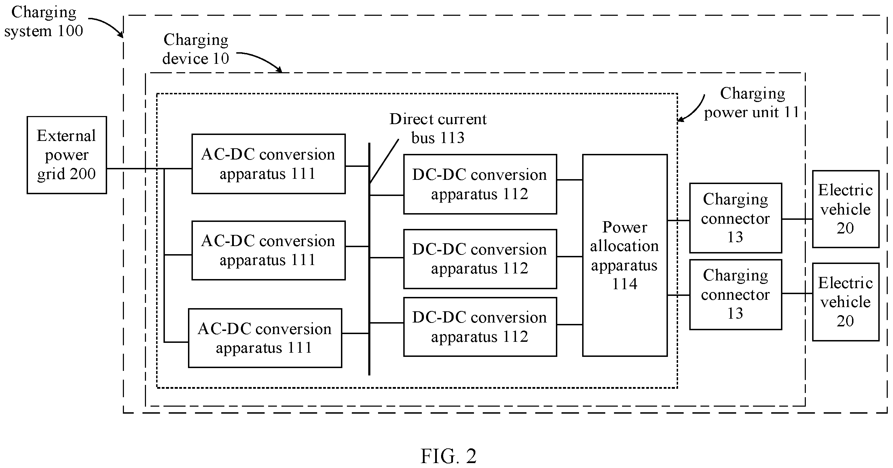

FIG. 2 is a diagram of a connection structure of the charging system 100 shown in FIG. 1. The charging power unit 11 includes a plurality of AC-DC conversion apparatuses 111, a plurality of DC-DC conversion apparatuses 112, a direct current bus 113, and a power allocation apparatus 114.

The plurality of AC-DC conversion apparatuses 111 are connected in parallel between the external power grid 200 and the direct current bus 113. The plurality of AC-DC conversion apparatuses 111 are configured to: receive an alternating current from the external power grid 200, convert the alternating current into direct currents, and output the direct currents through the direct current bus 113.

Input ends of the plurality of DC-DC conversion apparatuses 112 are connected to the direct current bus 113, and output ends of the plurality of DC-DC conversion apparatuses 112 are connected to charging connectors 13 via the power allocation apparatus 114. The plurality of DC-DC conversion apparatuses 112 are configured to: receive, through the direct current bus 113, the direct currents output by the plurality of AC-DC conversion apparatuses 111, further convert the direct currents into direct currents applicable to electric vehicles 20, and then transmit the direct currents to the power allocation apparatus 114.

The power allocation apparatus 114 is configured to: dynamically allocate, based on charging powers actually required by the electric vehicles 20, the direct currents output by the plurality of DC-DC conversion apparatuses 112; and transmit, to the electric vehicles 20 via the charging connectors 13, charging powers obtained through allocation, to charge the electric vehicles 20.

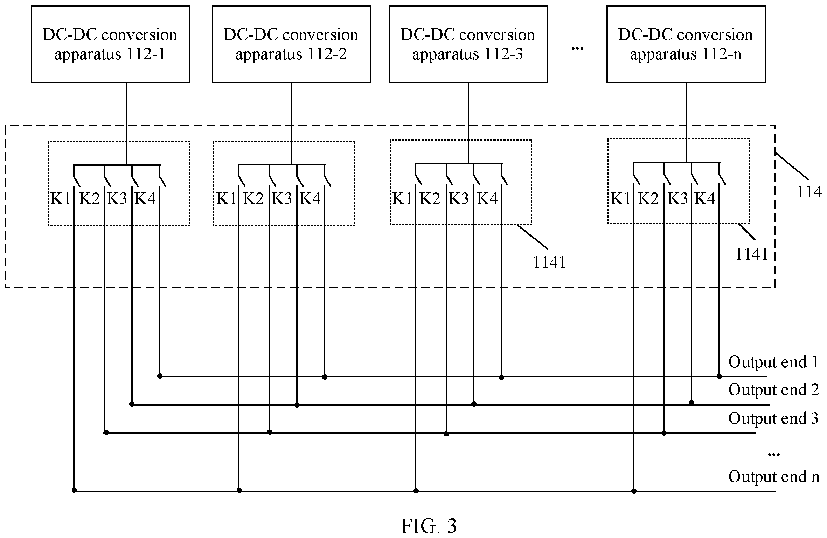

FIG. 3 is a diagram of an overall charging architecture of an example of a charging device 10 according to an embodiment of this application. As shown in FIG. 3, the power allocation apparatus 114 includes a plurality of power allocation units 1141. Each power allocation unit 1141 includes one input end and a plurality of output ends. The input end of each power allocation unit 1141 is connected to the plurality of output ends via a group of switch components. The input ends of the plurality of the power allocation units 1141 are one-to-one connected to the plurality of DC-DC conversion apparatuses 112. The plurality of output ends of each power allocation unit 1141 are correspondingly connected to a plurality of output ends of other power allocation units 1141, to form a plurality of output ends of the power allocation apparatus 114. During specific implementation, the plurality of output ends of the power allocation apparatus 114 are one-to-one connected to a plurality of charging connectors 13, to connect to the electric vehicles 20.

As described in the foregoing background part, in a current actual application, different charging scenarios usually have different demands for an output end of the power allocation apparatus 114. For example, in a large charging station scenario, a large quantity of charging connectors 13 are usually disposed on the charging device 10, to meet a requirement of simultaneously providing charging services for a large quantity of electric vehicles 20. Correspondingly, there is a large demand for the output end of the power allocation apparatus 114, to simultaneously allocate output powers to a plurality of charging connectors 13. However, in a small charging station scenario, the charging device 10 only needs to meet a requirement of simultaneously providing charging services for a small quantity of electric vehicles 20. Therefore, a small quantity of charging connectors 13 are disposed. Correspondingly, there is a small demand for the output end of the power allocation apparatus 114.

However, an existing overall charging architecture of the charging device 10 is mostly applicable to a large charging station scenario. Correspondingly, a large quantity of output ends are usually disposed on the power allocation apparatus 114, to meet a large demand for the output end of the power allocation apparatus 114 in the large charging station scenario.

For example, FIG. 3 is a diagram of an overall charging architecture of an example of a charging device 10 according to an embodiment of this application. As shown in FIG. 3, the power allocation apparatus 114 includes the plurality of power allocation units 1141. Each power allocation unit 1141 includes the one input end and the plurality of output ends, and the input end is connected to the plurality of output ends through the group of switch components. The input ends of the plurality of the power allocation units 1141 are one-to-one connected to the plurality of DC-DC conversion apparatuses 112. The plurality of output ends of the plurality of power allocation units 1141 are correspondingly connected, to form the plurality of output ends of the power allocation apparatus 114. During specific implementation, the plurality of output ends of the power allocation apparatus 114 are one-to-one connected to the plurality of charging connectors 13, to connect to electric vehicles 20.

As described above, the power allocation apparatus 114 shown in FIG. 3 has a large quantity of output ends. When a demand for the output end of the power allocation apparatus 114 is reduced, some output ends of the current power allocation apparatus 114 are in an idle state in an actual application. As a result, utilization of switch components that are in the power allocation units 1141 and that are connected to the some output ends is reduced, and the switch components are wasted. If the power allocation apparatus 114 is reconstructed to reduce a quantity of output ends of the power allocation apparatus 114, a quantity of power allocation units 1141 in the power allocation apparatus 114 and a quantity of DC-DC conversion apparatuses 112 correspondingly connected to the power allocation units 1141 may be reduced. As a result, an entire power of the charging device 10 is reduced, and entire reconstruction is inflexible.

Therefore, how to meet different demands of different charging scenarios for the quantity of output ends of the power allocation apparatus is an urgent problem to be resolved.

Based on the foregoing content, embodiments of this application provide a power allocation apparatus and a charging device, to flexibly adjust a quantity of output ends that are of the power allocation apparatus and that are actually configured to connect to a load, so as to meet different demands of different charging scenarios for an output end of the power allocation apparatus.

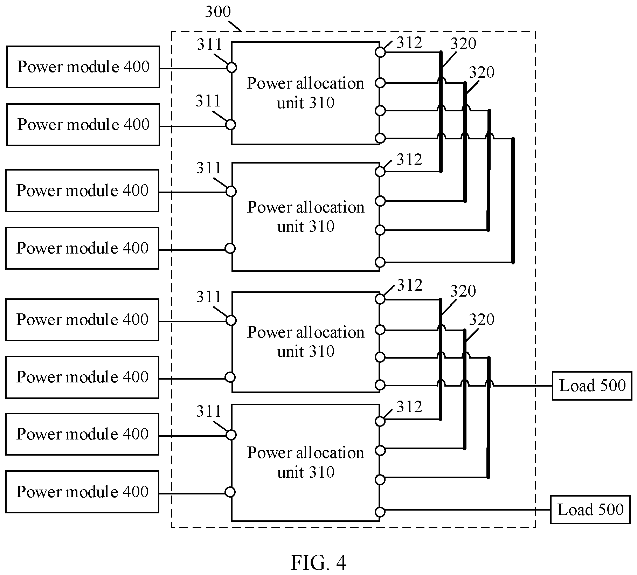

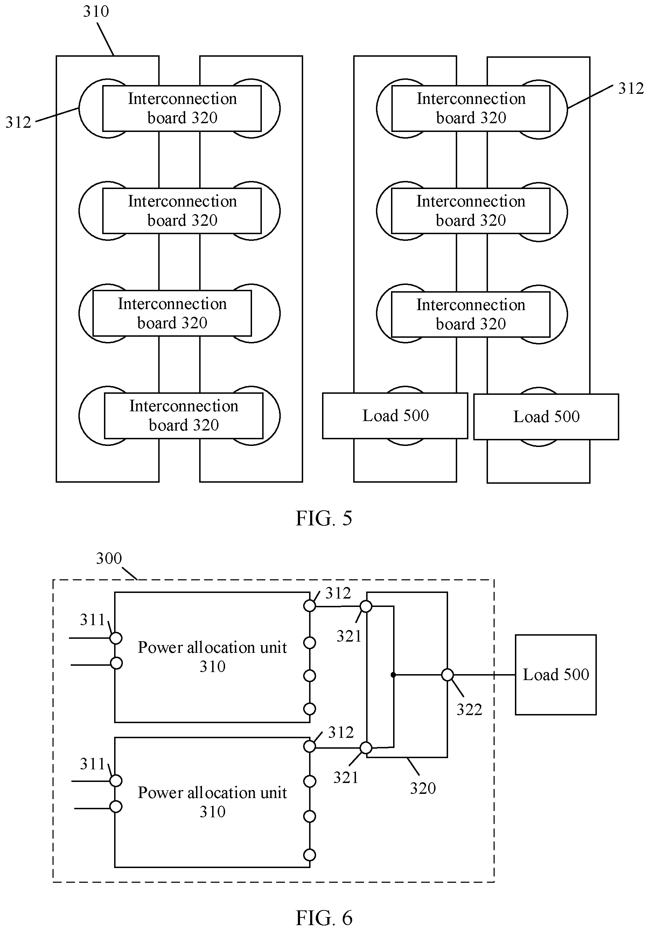

FIG. 4 and FIG. 5 are diagrams of a structure of a power allocation apparatus 300 in different views according to an embodiment of this application. It should be understood that the power allocation apparatus 300 may be the power allocation apparatus 114 shown in FIG. 2.

Refer to FIG. 4 and FIG. 5. The power allocation apparatus 300 may include a plurality of power allocation units 310 and at least one interconnection board 320. Each power allocation unit 310 includes at least one input end 311 and a plurality of output ends 312, each input end 311 is configured to connect to a power module 400, and at least some output ends 312 in the plurality of output ends 312 are configured to connect to an interconnection board 320.

In this embodiment of this application, the power module 400 may be configured to provide a direct current power required for charging. For example, the power module 400 may be the DC-DC conversion apparatus 112 shown in FIG. 2. During specific implementation, in an example, as shown in FIG. 4, each input end 311 of each power allocation unit 310 is connected to one power module 400. Therefore, when there are a plurality of input ends 311 of the power allocation unit 310, power transmission between any input end 311 in the plurality of input ends 311 and a power module 400 can be independently controlled, to avoid mutual impact. In another example, each power allocation unit 310 is connected to one power module 400. The power module 400 includes at least one power module output end, and at least one input end 311 of each power allocation unit 310 is one-to-one connected to at least one power module output end of one power module 400. Therefore, when there are a large quantity of input ends 311 of each power allocation unit 310 in the power allocation apparatus 300, compared with a manner in which each input end 311 is connected to one power module 400, this manner helps reduce a quantity of power modules 400 connected to the power allocation apparatus 300, thereby helping reduce costs.

For ease of description and understanding, this embodiment of this application is described by using an example in which each input end 311 of each power allocation unit 310 in the power allocation apparatus 300 is connected to one power module 400.

In addition, in this embodiment of this application, a quantity of input ends of each power allocation unit 310 is less than a quantity of output ends of the power allocation unit.

It may be understood that, that at least some output ends 312 in a plurality of output ends 312 of a power allocation unit 310 are configured to connect to an interconnection board 320 may mean that each output end 312 of the power allocation unit 310 is configured to connect to an interconnection board 320 and then connect to a load 500, for example, as shown by a 1^{st} power allocation unit 310 and a 2^{nd} power allocation unit 310 in FIG. 5; or mean that a part of output ends 312 of the power allocation unit 310 are configured to connect to interconnection boards 320 and then connect to a load 500, and the other part of output ends 312 are not connected to an interconnection board 320, but are directly configured to connect to a load 500, for example, as shown by a 3^{rd} power allocation unit 310 and a 4^{th} power allocation unit 310 in FIG. 5. Therefore, each power allocation unit 310 may be configured to: reallocate a power output by the connected power module 400; and then output, to the connected load 500 or interconnection board 320 through the output end 312, a power obtained through allocation.

It should be noted that, in a possible case, based on an actual application and a design requirement, the power allocation apparatus 300 may further include another power allocation unit except for the foregoing power allocation unit 310. The another power allocation unit includes at least one input end and a plurality of output ends. Each input end of the another power allocation unit may be configured to connect to a power module 400, and each output end of the another power allocation unit may not be connected to an interconnection board 320, but is directly configured to connect to a load 500. For ease of description and understanding, this embodiment of this application is described by using an example in which the power allocation apparatus 300 does not include the another power allocation unit, and includes only the plurality of power allocation units 310 described above.

During specific implementation, in an example, each input end 311 and each output end 312 of a power allocation unit 310 are connected through a switch, so that each input end 311 can allocate a received power output by a power module 400 to each output end 312. In another example, each input end 311 of a power allocation unit 310 may be alternatively directly connected to at least some output ends 312 of the power allocation unit 310, so that each input end 311 can allocate a received power output by a power module 400 to the at least some directly connected output ends 312.

In this embodiment of this application, direct connection may mean that no switch is disposed between each input end 311 and at least some output ends 312, and each input end 311 is directly connected to the at least some output ends 312 through a cable or a copper bar. Specific descriptions about direct connection between each input end 311 of the power allocation unit 310 and at least some output ends 312 of a power allocation unit 310 are described below, and details are not described herein again.

For ease of description and connection, an example in which each input end 311 and each output end 312 of a power allocation unit 310 are connected through a switch is used for description below.

Still refer to FIG. 4 and FIG. 5. In the power allocation apparatus 300, each interconnection board 320 is connected to output ends 312 of at least two power allocation units 310 in the plurality of power allocation units 310, and is configured to converge powers output by the output ends 312 of the at least two power allocation units 310 connected to the interconnection board 320. It may be understood that the interconnection board 320 may be of a structure in which a power transmission medium such as a copper bar or a cable is disposed and power transmission can be performed.

During specific implementation, the powers output by the output ends 312 of the at least two power allocation units 310 connected to the interconnection board 320 can be converged by the interconnection board 320 and then transmitted to a load 500. That is, the interconnection board 320 can combine the output ends 312 of the at least two connected power allocation units 310 into one output end configured to connect to the load 500.

Therefore, in this embodiment of this application, a quantity of interconnection boards 320 connected to the plurality of power allocation units 310 in the power allocation apparatus 300 may be adjusted, to flexibly adjust a quantity of output ends that are of the plurality of power allocation units 310 and that are actually configured to connect to a load 500, that is, flexibly adjust a quantity of output ends that are of the power allocation apparatus 300 and that are actually configured to connect to the load 500, so as to meet different demands of different charging scenarios for the output end of the power allocation apparatus 300.

For example, the power allocation apparatus 300 shown in FIG. 4 and FIG. 5 includes four power allocation units 310, and each power allocation unit 310 includes two input ends 311 and four output ends 312. It is assumed that each output end 312 of each power allocation unit 310 is configured to directly connect to a load 500. In this case, a maximum quantity of output ends that are of the four power allocation units 310 and that are actually configured to connect to the load 500 is 16.

When a demand for an output end of the power allocation apparatus 300 is reduced, as shown in FIG. 5, the output ends 312 of the four power allocation units 310 may be connected to seven interconnection boards 320, to reduce a quantity of output ends that are of the four power allocation units 310 and that are actually configured to connect to the load 500. One interconnection board 320 is separately connected to a 1^{st} output end 312 of the 1^{st} power allocation unit 310 and a 1^{st} output end 312 of the 2^{nd} power allocation unit 310, so that powers output by the 1^{st} output end 312 of the 1^{st} power allocation unit 310 and the 1^{st} output end 312 of the 2^{nd} power allocation unit 310 can be converged by the interconnection board 320 and then transmitted to a load 500. In other words, the connected interconnection board 320 can combine the 1^{st} output end 312 of the 1^{st} power allocation unit 310 and the 1^{st} output end 312 of the 2^{nd} power allocation unit 310 into one output end that is actually configured to connect to the load 500.

Similarly, an interconnection board 320 combines a 2^{nd} output end 312 of the 1^{st} power allocation unit 310 and a 2^{nd} output end 312 of the 2^{nd} power allocation unit 310 into one output end that is actually configured to connect to a load 500, ..., an interconnection board 320 combines a 3^{rd} output end 312 of the 3^{rd} power allocation unit 310 and a 3^{rd} output end 312 of the 4^{th} power allocation unit 310 into one output end that is actually configured to connect to a load 500, and a 4^{th} output end 312 of the 3^{rd} power allocation unit 310 and a 4^{th} output end 312 of the 4^{th} power allocation unit 310 are respectively configured to directly connect to loads 500. Therefore, the output ends 312 of the four power allocation units 310 are connected to the seven interconnection boards 320, so that a quantity of output ends that are of the four power allocation units 310 and that are actually configured to connect to the load 500 can be adjusted from a maximum of 16 to 9. This helps meet a reduced demand for the output end of the power allocation apparatus 300.

In addition, in this embodiment of this application, because the output ends 312 of the plurality of power allocation units 310 in the power allocation apparatus 300 can simultaneously output powers, a quantity of power allocation units 310 connected to each interconnection board 320 is adjusted, so that a value of a maximum output power converged to each interconnection board 320 from the plurality of power allocation units 310 can be further flexibly adjusted, to flexibly adjust the maximum output power that is converged by each interconnection board 320 and then transmitted to the load 500. For example, during specific implementation, the load 500 may be an electric vehicle, and an output power converged by each interconnection board 320 may be transmitted to an electric vehicle via a charging connector. When the power module 400 charges an electric vehicle via the power allocation apparatus 300, a quantity of power allocation units 310 connected to an interconnection board 320 is increased, so that a maximum output power that is converged by the interconnection board 320 and then transmitted to the electric vehicle can be increased, that is, a maximum output power of a charging connector for the electric vehicle is increased. Therefore, the charging connector can perform high-power ultra-fast charging on the electric vehicle. This helps implement a charging speed of one kilometer per second, that is, helps provide, within one second, the electric vehicle with electric energy for driving one kilometer.

It may be understood that ultra-fast charging may mean that a maximum output power of a single connector is greater than or equal to a preset power, for example, the preset power may be 250 kW.

In an example, the example in which the power allocation apparatus 300 shown in FIG. 4 and FIG. 5 includes four power allocation units 310 and seven interconnection boards 320 and each power allocation unit 310 includes two input ends 311 and four output ends 312 is still used. It is assumed that a maximum power output to each input end 311 by the power module 400 is 40 kW, a maximum power that can be output by each output end 312 is 80 kW. Therefore, in the embodiment shown in FIG. 4 and FIG. 5, because each interconnection board 320 is connected to output ends 312 of two power allocation units 310, a maximum power that can be converged by each interconnection board 320 is 160 kW, that is, a maximum output power that is converged by each interconnection board 320 and then transmitted to a load 500 is 160 kW.

If two interconnection boards 320 in the seven interconnection boards 320 are replaced with one interconnection board 320, that is, a quantity of power allocation units 310 connected to one interconnection board 320 is increased from 2 to 4, a maximum power that can be converged by the interconnection board 320 is increased from 160 kW to 320 kW, that is, during specific implementation, a maximum power output by a single connector to an electric vehicle can be increased from 160 kW to 320 kW, to implement ultra-fast charging on the electric vehicle.

As mentioned above, the powers output by the at least two power allocation units 310 connected to the interconnection board 320 can be converged by the interconnection board 320 and then transmitted to the load 500. The following further describes a specific implementation in which the power converged by the interconnection board 320 is transmitted to the load 500.

FIG. 6 is a diagram of a structure of an example of connection between a power allocation unit 310 and an interconnection board 320 according to this embodiment of this application.

In some embodiments, as shown in FIG. 6, the interconnection board 320 includes at least two interconnection board input ends 321 and one interconnection board output end 322. The at least two interconnection board input ends 321 one-to-one correspond to at least two power allocation units 310 in the plurality of power allocation units 310 in the power allocation apparatus 300, and each interconnection board input end 321 is connected to one output end 312 of the corresponding power allocation unit 310. The interconnection board output end 322 is configured to connect to a load 500, to transmit powers output by output ends 312 of the at least two power allocation units 310 to the load 500. That is, the interconnection board 320 can combine the output ends 312 of the at least two connected power allocation units 310 into the interconnection board output end 322.

For example, an interconnection board input end 321 may be a connector disposed on the interconnection board 320, to be directly connected to an output end 312 of a power allocation unit 310. Alternatively, an interconnection board input end 321 may be a screw hole disposed on the interconnection board 320, to be connected to an output end 312 of a power allocation unit 310 in a threaded connection manner. For example, the interconnection board output end 322 may also be a screw hole disposed on the interconnection board 320.

It may be understood that, during specific implementation, any two interconnection board input ends 321 of the interconnection board 320 may also be connected to each other, so that power transmission is performed, through the interconnection board 320, between the output ends 312 of the at least two power allocation units 310 connected to the interconnection board 320.

In this embodiment of this application, the at least two interconnection board input ends 321 of the interconnection board 320 are respectively connected to the output ends 312 of the at least two power allocation units 310, so that powers output by the output ends 312 of the at least two power allocation units 310 can be converged to the interconnection board 320 and further transmitted to the load 500 through the interconnection board output end 322. That is, the interconnection board 320can combine the output ends 312 of the at least two power allocation units 310 into the interconnection board output end 322. In addition, the power allocation units 310 are connected to the load 500 through the interconnection board output end 322 of the interconnection board 320. Therefore, an overall connection structure is simple, and a normalized design is facilitated.

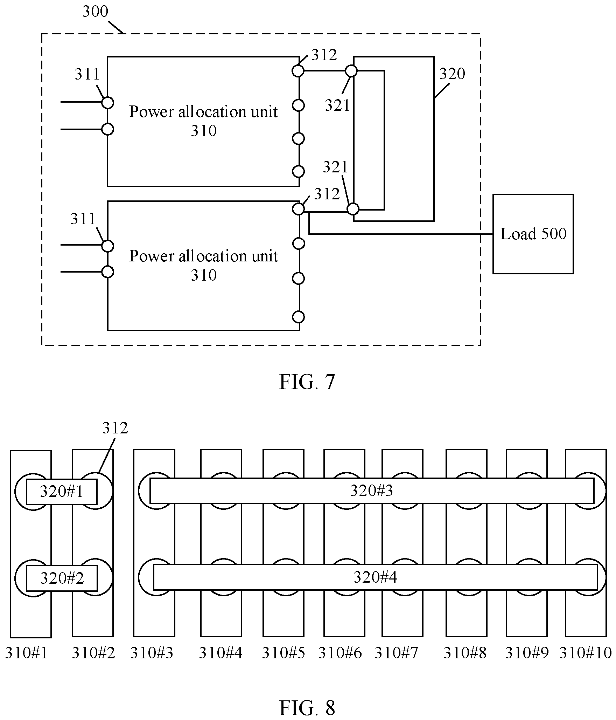

FIG. 7 is a diagram of a structure of another example of connection between the power allocation unit 310 and the interconnection board 320 according to this embodiment of this application.

In some other embodiments, as shown in FIG. 7, the interconnection board 320 may include only at least two interconnection board input ends 321, and does not include an interconnection board output end 322. An output end 312 of any power allocation unit 310 connected to the at least two interconnection board input ends 321 is configured to connect to a load 500.

During specific implementation, the interconnection board 320 can converge powers output by output ends 312 of the at least two connected power allocation units 310 to any interconnection board input end 321, and further transmit the converged power to the output end 312 of the power allocation unit 310 connected to the any interconnection board input end 321, and transmit the converged power to the load 500 through the output end 312 of the power allocation unit 310. That is, the interconnection board 320 can combine the output ends 312 of the at least two connected power allocation units 310 into the output end 312 of one of the power allocation units 310.

For specific descriptions of the interconnection board input end 321, refer to related descriptions in the foregoing embodiment. Details are not described herein again.

In this embodiment of this application, the at least two interconnection board input ends 321 of the interconnection board 320 are respectively connected to the output ends 312 of the at least two power allocation units 310, so that the powers output by the output ends 312 of the at least two power allocation units 310 can be converged to the output end 312 of one of the power allocation units 310 through the interconnection board 320 and further transmitted to the load 500 through the output end 312 of one of the power allocation units 310. That is, the interconnection board 320 can combine the output ends 312 of the at least two power allocation units 310 into the output end 312 of one of the power allocation units 310. In addition, only the interconnection board input end 321 configured to connect to the output end 312 of the power allocation unit 310 needs to be disposed on the interconnection board 320. Therefore, an overall structure of the interconnection board 320 is simple, and processing is facilitated.

It may be understood that, for ease of description and understanding, this embodiment of this application is described by using an example in which the interconnection board 320 includes the interconnection board input ends 321 and the interconnection board output end 322.

For better understanding of this embodiment of this application, the following describes the foregoing specific example in which the quantity of interconnection boards 320 connected to the plurality of power allocation units 310 in the power allocation apparatus 300 is adjusted, to flexibly adjust the quantity of output ends that are of the plurality of power allocation units 310 and that are actually configured to connect to the load 500.

FIG. 8 is a diagram of a structure of an example of a power allocation apparatus 300 according to an embodiment of this application.

In an example, as shown in FIG. 8, the power allocation apparatus 300 may include 10 power allocation units 310 and four interconnection boards 320, and each power allocation unit 310 includes one input end 311 and two output ends 312. That is, the power allocation apparatus 300 includes the power allocation units 310#1 to 310#10 and the interconnection boards 320#1 to 320#4.

The interconnection board 320#1 is separately connected to 1^{st} output ends 312 of the power allocation units 310#1 and 310#2, so that powers output by the 1^{st} output ends 312 of the power allocation units 310#1 and 310#2 can be transmitted to a load 500 through an interconnection board output end 322 of the interconnection board 320#1. In other words, the interconnection board 320#1 combines the 1^{st} output ends 312 of the power allocation units 310#1 and 310#2 into the interconnection board output end 322 of the interconnection board 320#1.

Similarly, the interconnection board 320#2 is separately connected to 2^{nd} output ends 312 of the power allocation units 310#1 and 310#2, the interconnection board 320#3 is separately connected to 1^{st} output ends 312 of the power allocation units 310#3 to 310#10, and the interconnection board 320#4 is separately connected to 2^{nd} output ends 312 of the power allocation units 310#3 to 310#10.

In addition, it is still assumed that a maximum power output by a power module 400 to each input end 311 is 40 kW. A maximum power that can be output by each output end 312 is 40 kW. Therefore, a maximum power that can be converged by the interconnection boards 320#1 and 320#2 is 80 kW, and a maximum power that can be converged by the interconnection boards 320#3 and 320#4 is 320 kW, that is, the maximum output power that is converged by the interconnection boards 320#1 and 320#2 and then transmitted to a load 500 is 80 kW, and the maximum output power that is converged by the interconnection boards 320#3 and 320#4 and then transmitted to a load 500 is 320 kW.

Therefore, the output ends 312 of the 10 power allocation units 310 are connected to the four interconnection boards 320, so that a quantity of output ends that are of the 10 power allocation units 310 and that are actually configured to connect to a load 500 can be adjusted from a maximum of 20 to 4. In addition, the four output ends include two fast charging output ends and two ultra-fast charging output ends. It should be understood that the fast charging output end may be an output end whose maximum output power is less than or equal to a preset power, and the ultra-fast charging output end may be an output end whose maximum output power is greater than the preset power. For example, the preset power may be 250 kW. During specific implementation, the fast charging output end and the ultra-fast charging output end may respectively transmit powers to electric vehicles through charging connectors.

In the foregoing technical solution, the 20 output ends 312 of the 10 power allocation units 310 are adjusted to the two fast charging output ends that are actually configured to connect to loads 500 and two ultra-fast charging output ends that are actually configured to connect to loads 500, so that not only a quantity of output ends that are of the power allocation apparatus 300 and that are actually configured to connect to the load 500 can meet a small demand for the output end, but also, during specific implementation, the power module 400 can perform ultra-fast charging on the electric vehicle through the ultra-fast charging output end, and perform fast charging on the electric vehicle through the fast charging output end. Therefore, not only a charging service can be provided for an electric vehicle of an ultra-fast charging vehicle model, but also a charging service can be provided for an electric vehicle of a common vehicle model, to match more vehicle models.

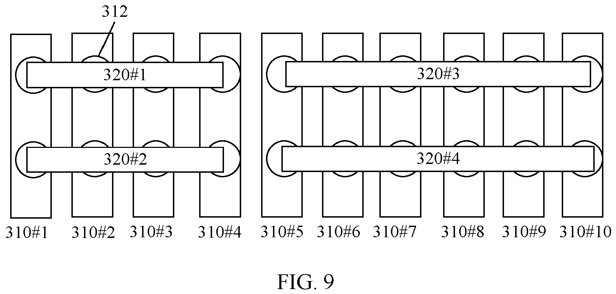

FIG. 9 is a diagram of a structure of an example of the power allocation apparatus 300 according to an embodiment of this application.

In another example, as shown in FIG. 9, same as that in the example shown in FIG. 8, the power allocation apparatus 300 includes 10 power allocation units 310 and four interconnection boards 320, and each power allocation unit 310 includes one input end 311 and two output ends 312. That is, the power allocation apparatus 300 includes the power allocation units 310#1 to 310#10 and the interconnection boards 320#1 to 320#4.

Different from the example shown in FIG. 8, in the example shown in FIG. 9, the interconnection board 320#1 is separately connected to 1^{st} output ends 312 of the power allocation units 310#1 to 310#4, the interconnection board 320#2 is separately connected to 2^{nd} output ends 312 of the power allocation units 310#1 to 310#4, the interconnection board 320#3 is separately connected to 1^{st} output ends 312 of the power allocation units 310#5 to 310#10, and the interconnection board 320#5 is separately connected to 2^{nd} output ends 312 of the power allocation units 310#5 to 310#10.

In addition, it is still assumed that a maximum power output by a power module 400 to each input end 311 is 40 kW. A maximum power that can be converged by the interconnection boards 320#1 and 320#2 is 160 kW, and a maximum power that can be converged by the interconnection boards 320#3 and 320#4 is 240 kW, that is, the maximum output power that is converged by the interconnection boards 320#1 and 320#2 and then transmitted to a load 500 is 160 kW, and the maximum output power that is converged by the interconnection boards 320#3 and 320#4 and then transmitted to a load 500 is 240 kW.

Therefore, in the example shown in FIG. 9, same as that in the example shown in FIG. 8, the output ends 312 of the 10 power allocation units 310 are connected to the four interconnection boards 320, so that a quantity of output ends that are of the 10 power allocation units 310 and that are actually configured to connect to a load 500 can be adjusted from a maximum of 20 to 4. Different from the example shown in FIG. 8, in the example shown in FIG. 9, a quantity of power allocation units 310 connected to each interconnection board 320 is adjusted, so that all four output ends that are actually configured to connect to the loads 500 are fast charging output ends. Therefore, a quantity of output ends that are of the power allocation apparatus 300 and that are actually configured to connect to the load 500 can meet a small demand for the output end, and average power allocation can be implemented.

An example in which each power allocation unit 310 includes one input end 311 and two output ends 312 is used for description above. The following uses an example in which each power allocation unit 310 includes two input ends 311 and four output ends 312 for description.

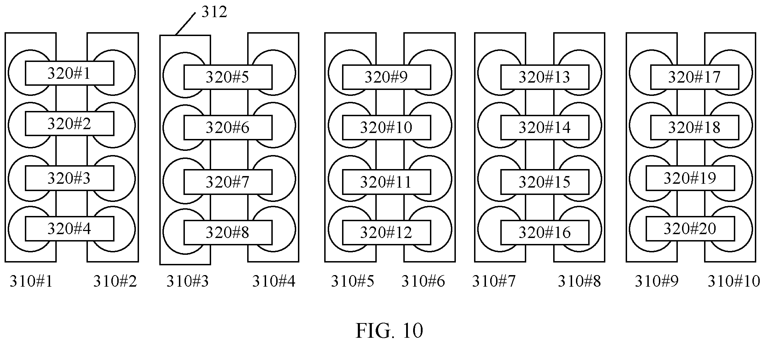

FIG. 10 is a diagram of a structure of an example of a power allocation apparatus 300 according to an embodiment of this application.

In an example, as shown in FIG. 10, the power allocation apparatus 300 may include 10 power allocation units 310 and 20 interconnection boards 320, and each power allocation unit 310 includes two input ends 311 and four output ends 312. That is, the power allocation apparatus 300 includes the power allocation units 310#1 to 310#10 and the interconnection boards 320#1 to 320#20.

The interconnection board 320#1 is separately connected to 1^{st} output ends 312 of the power allocation units 310#1 and 310#2, the interconnection board 320#2 is separately connected to 2^{nd} output ends 312 of the power allocation units 310#1 and 310#2, ..., and the interconnection board 320#20 is separately connected to 4^{th} output ends 312 of the power allocation units 310#9 and 310#10.

In addition, it is still assumed that a maximum power output by a power module 400 to each input end 311 is 40 kW. A maximum power that can be output by each output end 312 is 80 kW. Therefore, maximum powers that can be converged by the interconnection boards 320#1 to 320#20 are all 160 kW, that is, maximum output powers that are respectively converged by the interconnection boards 320#1 to 320#20 and then transmitted to loads 500 are all 160 kW.

Therefore, the output ends 312 of the 10 power allocation units 310 are connected to the 20 interconnection boards 320, so that a quantity of output ends that are of the 10 power allocation units 310 and that are actually configured to connect to the load 500 can be adjusted from a maximum of 40 to 20. In addition, the 20 output ends are all ultra-fast charging output ends. Therefore, a quantity of output ends that are of the power allocation apparatus 300 and that are actually configured to connect to the load 500 can meet a small demand for the output end, and average power allocation can be implemented.

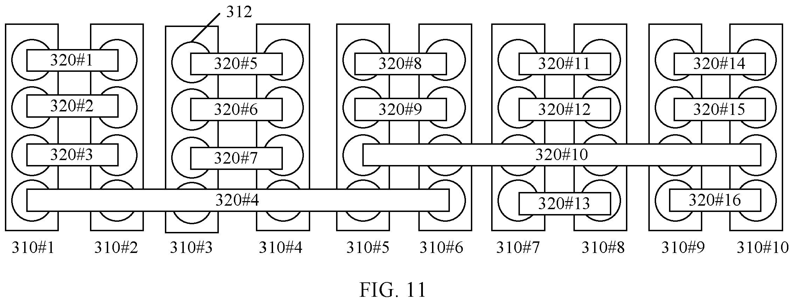

FIG. 11 is a diagram of a structure of another example of the power allocation apparatus 300 according to this embodiment of this application.

In another example, as shown in FIG. 11, same as that in the example shown in FIG. 10, the power allocation apparatus 300 may include 10 power allocation units 310, and each power allocation unit 310 includes two input ends 311 and four output ends 312. Different from the embodiment shown in FIG. 10, in the example shown in FIG. 11, the power allocation apparatus 300 includes 16 interconnection boards 320. That is, the power allocation apparatus 300 includes the power allocation units 310#1 to 310#10 and the interconnection boards 320#1 to 320#16.

The interconnection board 320#4 is separately connected to 4^{th} output ends 312 of the power allocation units 310#1 to 310#6, the interconnection board 320#10 is separately connected to 3^{rd} output ends 312 of the power allocation units 310#5 to 310#10, and each of the remaining interconnection boards 320 is separately connected to output ends 312 of two power allocation units 310. For specific connection, refer to FIG. 11.

In addition, it is still assumed that a maximum power output by a power module 400 to each input end 311 is 40 kW. A maximum power that can be converged by the interconnection boards 320#4 and 320#10 is 480 kW, and a maximum power that can be converged by the remaining interconnection boards 320 is 160 kW, that is, a maximum output power that is converged by the interconnection boards 320#4 and 320#10 and then transmitted to a load 500 is 480 kW, and a maximum output power that is converged by the remaining interconnection boards 320 and then transmitted to a load 500 is 160 kW.

Therefore, the output ends 312 of the 10 power allocation units 310 are connected to the 16 interconnection boards 320, so that a quantity of output ends that are of the 10 power allocation units 310 and that are actually configured to connect to a load 500 can be adjusted from a maximum of 40 to 16. In addition, the 16 output ends include two ultra-fast charging output ends and 14 fast charging output ends. Therefore, a quantity of output ends that are of the power allocation apparatus 300 and that are actually configured to connect to the load 500 can meet a small demand for the output end, different requirements for a charging power of the load 500 can be met, and flexibility of allocating the output power to the load 500 by the power allocation apparatus 300 is improved.

The following further describes a specific form in which a plurality of power allocation units 310 in the power allocation apparatus 300 are connected to at least one interconnection board 320.

In some embodiments, there may be a plurality of interconnection boards 320 in the power allocation apparatus 300. At least two interconnection boards 320 in the plurality of interconnection boards 320 are one-to-one connected to at least two output ends 312 of one power allocation unit 310 in the plurality of power allocation units 310. In addition, each interconnection board 320 in the at least two interconnection boards 320 is further connected to an output end 312 of a power allocation unit 310 other than the one power allocation unit 310 in the plurality of power allocation units 310. That is, the at least two interconnection boards 320 connected to different output ends 312 of a same power allocation unit 310 are further respectively connected to output ends 312 of different power allocation units 310.

In this embodiment of this application, because the at least two interconnection boards 320 connected to different output ends 312 of a same power allocation unit 310 are further respectively connected to output ends 312 of different power allocation units 310, the at least two interconnection boards 320 can simultaneously converge powers output by the output ends 312 of the same power allocation unit 310 and powers output by the output ends 312 of at least two other different power allocation units 310. Compared with a solution in which the power allocation units 310 connected to the at least two interconnection boards 320 are completely the same, the foregoing technical solution is more conducive to increasing a value of a total power that is simultaneously converged by the at least two interconnection boards 320 and output to a load 500, thereby increasing power utilization of the power module 400 connected to the power allocation apparatus 300.

For example, still refer to FIG. 11. The interconnection boards 320#4 and 320#10 are used as an example. The interconnection boards 320#4 and 320#10 are respectively connected to different output ends 312 of the power allocation units 310#5 and 310#6, the interconnection board 320#4 is further connected to an output end 312 of each of the power allocation units 310#1 to 310#4, and the interconnection board 320#10 is further connected to an output end 312 of each of the power allocation units 310#7 to 310#10. That is, the power allocation units 310 connected to the interconnection boards 320#4 and 320#10 are partially the same. In this case, the interconnection board 320#4 and the interconnection board 320#10 can simultaneously converge powers output by the output ends 312 of the power allocation units 310#1 to 310#10.

It is assumed that a maximum power output by the power module 400 connected to the power allocation apparatus 300 to each input end 311 of each power allocation unit 310 is 40 kW. Maximum output powers that are respectively converged by the interconnection board 320#4 and the interconnection board 320#10 and then transmitted to a load 500 are both 480 kW, and an entire power of the power module 400 connected to the power allocation apparatus 300 is 800 kW. When the interconnection boards 320#4 and 320#10 are simultaneously configured to transmit the converged powers to the load 500, and another interconnection board 320 is not configured to transmit a converged power to a load 500, a maximum output power that is converged by the interconnection board 320#4 and the interconnection board 320#10 and then transmitted to the load 500 is 800 kW. In this case, power utilization of the power module 400 connected to the power allocation apparatus 300 is 100%, and the power utilization is high.

When both the interconnection board 320#4 and the interconnection board 320#10 are connected to different output ends 312 of the power allocation units 310#5 to 310#10, that is, the power allocation units 310 connected to the interconnection board 320#4 and the interconnection board 320#10 are completely the same, the interconnection board 320#4 and the interconnection board 320#10 can simultaneously converge powers output by the output ends 312 of the power allocation units 310#5 to 310#10. It is still assumed that a maximum power output by the power module 400 connected to the power allocation apparatus 300 to each input end 311 of each power allocation unit 310 is 40 kW. When both the interconnection board 320#4 and the interconnection board 320#10 are configured to simultaneously transmit the converged powers to loads 500, and another interconnection board 320 is not configured to transmit a converged power to a load 500, a maximum output power that is converged by the interconnection board 320#4 and the interconnection board 320#10 and then transmitted to the load 500 is 480 kW. In this case, power utilization of the power module 400 connected to the power allocation apparatus 300 is 60%, and the power utilization is lower than that implemented when the power allocation units 310 connected to the interconnection board 320#4 and the interconnection board 320#10 are partially the same.

Therefore, in this embodiment of this application, when the interconnection boards 320#4 and 320#10 are both connected to the output ends 312 of the power allocation units 310#5 and 310#6, the interconnection board 320#4 is connected to the output ends 312 of the power allocation units 310#1 to 310#4, and the interconnection board 320#10 is connected to the output ends 312 of the power allocation units 310#7 to 310#10, so that compared with a manner in which the interconnection boards 320#4 and 320#10 are both connected to output ends 312 of the power allocation units 310#5 to 310# 10 or are both connected to output ends 312 of the power allocation units 310# 1 to 310#6, this manner is more conducive to increasing a value of a total power that is simultaneously converged by the interconnection boards 320#4 and 320#10 and output to a load 500, thereby increasing power utilization of the power module 400 connected to the power allocation apparatus 300.

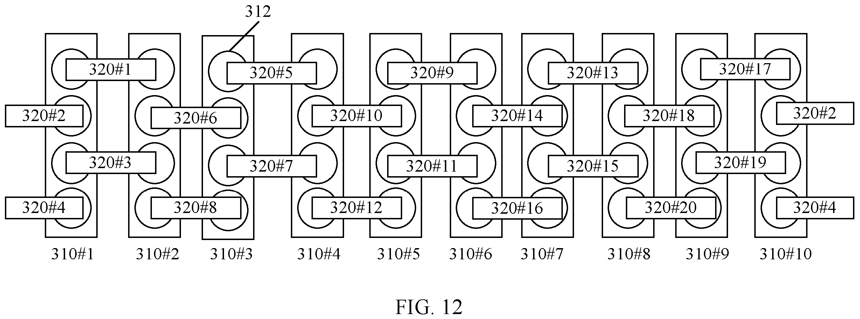

For another example, FIG. 12 is a diagram of a structure of an example of a power allocation apparatus 300 according to an embodiment of this application. As shown in FIG. 12, the power allocation apparatus 300 may include 10 power allocation units 310 and 20 interconnection boards 320, and each power allocation unit 310 includes two input ends 311 and four output ends 312. That is, the power allocation apparatus 300 includes the power allocation units 310#1 to 310#10 and the interconnection boards 320#1 to 320#20.

The interconnection board 320#1 is separately connected to 1^{st} output ends 312 of the power allocation units 310#1 and 310#2, the interconnection board 320#2 is separately connected to 2^{nd} output ends 312 of the power allocation units 310#1 and 310#10, the interconnection board 320#3 is separately connected to 3^{rd} output ends 312 of the power allocation units 310#1 and 310#2, ..., and the interconnection board 320#20 is separately connected to 4^{th} output ends 312 of the power allocation units 310#8 and 310#9. That is, the interconnection boards 320#1 to 320#20 are sequentially connected in a staggered manner.

The interconnection boards 320#9 to 320#12 are used as an example. The interconnection boards 320#9 and 320#10 are respectively connected to different output ends 312 of the power allocation unit 310#5, the interconnection board 320#9 is further connected to an output end 312 of the power allocation unit 310#6, and the interconnection board 320#10 is further connected to an output end 312 of the power allocation unit 310#4. In this case, the interconnection boards 320#9 and 320#10 can simultaneously converge powers output by the output ends 312 of the power allocation units 310#4 to 310#6. Similarly, the interconnection boards 320#11 and 320#12 are respectively connected to different output ends 312 of the power allocation unit 310#5, the interconnection board 320#11 is further connected to an output end 312 of the power allocation unit 310#6, and the interconnection board 320#12 is further connected to the output end 312 of the power allocation unit 310#4. The interconnection boards 320#11 and 320#12 can also simultaneously converge powers output by the output ends 312 of the power allocation units 310#4 to 310#6.

It is still assumed that a maximum power output by the power module 400 connected to the power allocation apparatus 300 to each input end 311 of each power allocation unit 310 is 40 kW. Maximum output powers that are respectively converged by the interconnection boards 320#9 to 320#12 and then transmitted to a load 500 are all 160 kW, and an entire power of the power module 400 connected to the power allocation apparatus 300 is 800 kW. When the interconnection boards 320#9 to 320#12 are simultaneously configured to transmit the converged powers to a load 500, and another interconnection board 320 is not configured to transmit a converged power to a load 500, a maximum output power that is converged by the interconnection boards 320#9 to 320#12 and then transmitted to the load 500 is 240 kW. In this case, power utilization of the power module 400 connected to the power allocation apparatus 300 is 30%.

However, when the interconnection boards 320#9 to 320#12 are respectively connected to different output ends 312 of the power allocation units 310#5 and 310#6, for example, as shown in FIG. 10, when the interconnection boards 320#9 to 320#12 are simultaneously configured to transmit converged powers to a load 500, and another interconnection board 320 is not configured to transmit a converged power to a load 500, a maximum output power that is converged by the interconnection boards 320#9 to 320#12 and then transmitted to the load 500 is 160 kW. In this case, power utilization of the power module 400 connected to the power allocation apparatus 300 is 20%, and the power utilization is lower than that implemented when the interconnection boards 320#9 to 320#12 are connected to the power allocation units 310#4 to 310#6.

Therefore, in this embodiment of this application, the interconnection boards 320#9 to 320#12 connected to the power allocation unit 310#5 are connected in a staggered manner, so that, compared with a case in which the interconnection boards 320#9 to 320#12 are respectively connected to the different output ends 312 of the power allocation units 310#5 and 310#6, this case is more conducive to increasing a value of a total power that is simultaneously converged by the interconnection boards 320#9 to 320#12 and output to the load 500. Therefore, the power utilization of the power module 400 connected to the power allocation apparatus 300 is increased.

The foregoing describes a specific example in which at least two interconnection boards 320 connected to at least two output ends 312 of one power allocation unit 310 in a plurality of power allocation units 310 of the power allocation apparatus 300 are further respectively connected to output ends 312 of different power allocation units 310. It may be understood that, in this embodiment of this application, power transmission may be further performed between the at least two interconnection boards 320 through the one connected power allocation unit 310.

Specifically, in some embodiments, the power allocation apparatus 300 further includes a first switch unit. In the power allocation apparatus 300, when at least two interconnection boards 320 in a plurality of interconnection boards 320 are one-to-one connected to at least two output ends 312 of one power allocation unit 310 in the plurality of power allocation units 310, and each interconnection board 320 in the at least two interconnection boards 320 is further connected to an output end 312 of a power allocation unit 310 other than the one power allocation unit 310 in the plurality of power allocation units 310, any two output ends 312 in the at least two output ends 312 of the one power allocation unit 310 may be connected to each other through the first switch unit.

The first switch unit is configured to disconnect or connect a power transmission path between two interconnection boards 320 connected to the any two output ends 312.

It may be understood that, because the any two output ends 312 of the one power allocation unit 310 are connected to each other through the first switch unit, when the first switch unit is turned on, the power transmission path between the any two output ends 312 is connected, and power transmission may be performed through the connected power transmission path and between the two interconnection boards 320 connected to the any two output ends 312. Therefore, a power converged by one interconnection board 320 connected to the any two output ends 312 can be scheduled to the other interconnection board 320. Because the two interconnection boards 320 connected to the any two output ends 312 are further respectively connected to output ends 312 of other different power allocation units 310, that is, the power allocation units 310 connected to the two interconnection boards 320 are partially the same, in addition to converging a power output by the output end 312 of the power allocation unit 310 that is connected to the other interconnection board, the other interconnection board 320 may further converge a power output by the output end 312 of the power allocation unit 310 that is connected to the one interconnection board 320 but not connected to the other interconnection board. This helps increase a value of a maximum output power that is converged by the other interconnection board 320 and then transmitted to the load 500, and further helps meet charging requirements of different loads 500, and improves flexibility of allocating an output power to the load 500 by the power allocation apparatus 300.

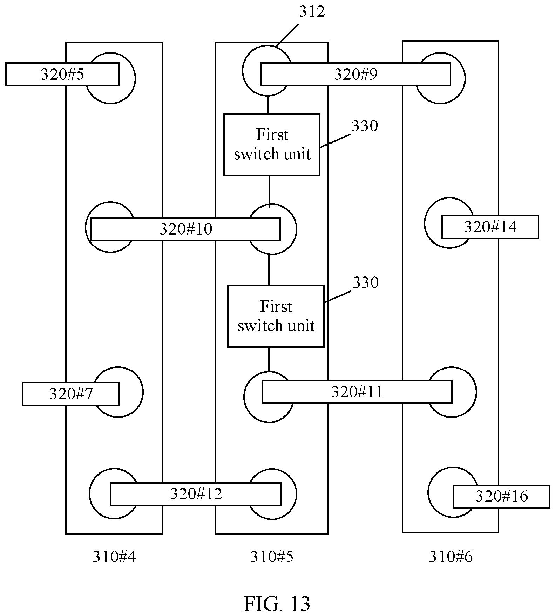

For example, FIG. 13 is a diagram of a partial structure of the power allocation apparatus 300 shown in FIG. 12. Refer to FIG. 13. The interconnection boards 320#9 and 320#10 shown in FIG. 12 are used as an example. The interconnection board 320#9 is separately connected to 1^{st} output ends 312 of the power allocation units 310#5 and 310#6, the interconnection board 320#10 is separately connected to 2^{nd} output ends 312 of the power allocation units 310#4 and 310#5, and the 1^{st} output end 312 and the 2^{nd} output end 312 of the power allocation unit 310#5 are connected to each other through a first switch unit 330.

When the first switch unit 330 is turned on, a power transmission path between the 1^{st} output end 312 and the 2^{nd} output end 312 of the power allocation unit 310#5 is connected. In this case, a power output by the 1^{st} output end 312 of the power allocation unit 310#6 may be transmitted to the 1^{st} output end 312 of the power allocation unit 310#5 via the interconnection board 320#9, and then transmitted to the interconnection board 320#10 through the power transmission path between the 1^{st} output end 312 and the 2^{nd} output end 312 of the power allocation unit 310#5.

During specific implementation, the interconnection board 320#9 may include two interconnection board input ends 321, the two interconnection board input ends 321 are respectively connected to the 1^{st} output ends 312 of the power allocation units 310#5 and 310#6, and the two interconnection board input ends 321 are connected to each other, to transmit the power output by the 1^{st} output end 312 of the power allocation unit 310#6 to the 1^{st} output end 312 of the power allocation unit 310#5.

Therefore, in addition to the powers output by the output ends 312 of the power allocation units 310#4 and 310#5, the interconnection board 320#10 may further converge the power output by the output end 312 of the power allocation unit 310#6. This helps increase a value of a maximum output power that is converged by the interconnection board 320#10 and then transmitted to the load 500, for example, increase a value of a maximum output power that is transmitted to the load 500 through the interconnection board output end 322 of the interconnection board 320#10, and further helps meet charging requirements of different loads 500 and improve flexibility of allocating the output power to the load 500 by the power allocation apparatus 300.

Still refer to FIG. 13. The interconnection boards 320#10 and 320#11 shown in FIG. 12 are used as an example. The interconnection board 320#10 is separately connected to 2^{nd} output ends 312 of the power allocation units 310#4 and 310#5, the interconnection board 320#11 is separately connected to 3^{rd} output ends 312 of the power allocation units 310#5 and 310#6, and the 2^{nd} output end 312 and the 3^{rd} output end 312 of the power allocation unit 310#5 are also connected to each other through a first switch unit 330.

When the first switch unit 330 is turned on, a power transmission path between the 2^{nd} output end 312 and the 3^{rd} output end 312 of the power allocation unit 310#5 is connected, so that the interconnection board 320#10 can transmit, to the interconnection board 3 20# 11, a power output by the 2^{nd} output end 312 of the power allocation unit 310#4. For descriptions of a specific process, refer to related descriptions of the foregoing process of power transmission between the interconnection boards 320#9 and 310# 10. Details are not described herein again.

Therefore, in addition to the powers output by the output ends 312 of the power allocation units 310#5 and 310#6, the interconnection board 320#11 may further converge a power output by the output end 312 of the power allocation unit 310#4. This helps increase a value of a maximum output power that is converged by the interconnection board 320#11 and then transmitted to the load 500, and further helps meet charging requirements of different loads 500 and improve flexibility of allocating the output power to the load 500 by the power allocation apparatus 300.

In some examples, in the power allocation apparatus 300, any two output ends 312 of each power allocation unit 310 are connected to each other through a first switch unit 330, to facilitate power transmission between a plurality of interconnection boards 320 connected to output ends 312 of the plurality of power allocation units 310.

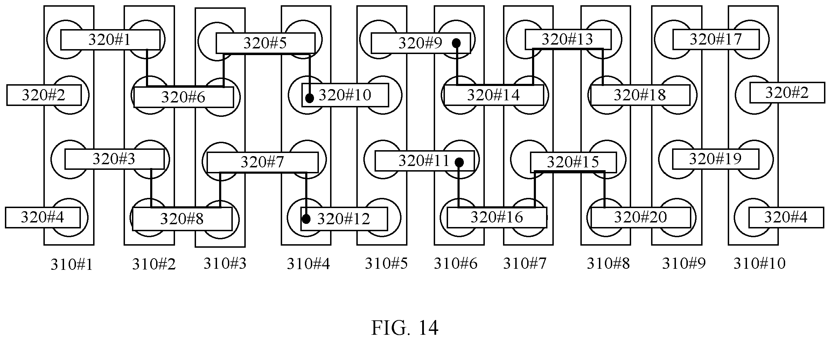

For example, FIG. 14 is a diagram of a structure of an example of a power allocation apparatus 300 according to an embodiment of this application.

Refer to FIG. 14. For example, the power allocation apparatus 300 with interconnection boards shown in FIG. 12 includes power allocation units 310#1 to 310#10 and interconnection boards 320#1 to 320#20, and the interconnection boards 320#1 to 320#20 are sequentially connected in a staggered manner. Any two output ends 312 of each power allocation unit 310 in the power allocation units 310#1 to 310#10 are connected to each other through a first switch unit 330 (not shown in the figure).

For example, powers converged by the interconnection boards 320#14, 320#13, and 320#18 are transmitted to the interconnection board 320#9. The interconnection board 320#18 is separately connected to 2^{nd} output ends 312 of the power allocation units 310#8 and 310#9, and the interconnection board 320#13 is separately connected to 1^{st} output ends 312 of the power allocation units 310#7 and 310#8. When a first switch unit 330 located between the 1^{st} output end 312 and the 2^{nd} output end 312 of the power allocation unit 310#8 is turned on, a power transmission path between the 1^{st} output end 312 and the 2^{nd} output end 312 of the power allocation unit 310#8 is connected. In this case, a power output by the 2^{nd} output end 312 of the power allocation unit 310#9 may be transmitted to the 2^{nd} output end 312 of the power allocation unit 310#8 through the interconnection board 320#18, and then transmitted to the interconnection board 320#13 through the connected power transmission path. This can increase a value of a maximum output power that is converged by the interconnection board 320#13 and then transmitted to a load 500, and helps meet different requirements for a charging power of the load 500.

Similarly, when a first switch unit 330 located between the 1^{st} output end 312 and the 2^{nd} output end 312 of the power allocation unit 310#7 is turned on, the interconnection board 320#13 may transmit, to the interconnection board 320#14, powers output by the 2^{nd} output end 312 of the power allocation unit 310#9 and the 1^{st} output end 312 of the power allocation unit 310#8. Then, the interconnection board 320#14 may transmit, to the interconnection board 320#9, powers output by the 2^{nd} output end 312 of the power allocation unit 310#9, the 1^{st} output end 312 of the power allocation unit 310#8, and the 2^{nd} output end 312 of the power allocation unit 310#7. Therefore, the interconnection board 320#9 can converge powers output by the output ends 312 of the power allocation units 310#5 to 310#9.

Similar to a process in which the powers converged by the interconnection boards 320#14, 320#13, and 320#18 are transmitted to the interconnection board 320#9, the interconnection boards 320#1, 320#6, and 320#5 can also transmit converged powers to the interconnection board 320#10, that is, the interconnection board 320#10 can simultaneously converge powers output by output ends 312 of the power allocation units 310# 1 to 310#5. By analogy, the interconnection board 320#11 can simultaneously converge powers output by output ends 312 of the power allocation units 310#5 to 310#9, and the interconnection board 320#12 can simultaneously converge powers output by output ends 312 of the power allocation units 310#1 to 310#5.

Therefore, when the interconnection boards 320#9 to 320#12 are simultaneously configured to output the converged powers to a load 500, average allocation of the output powers can be implemented. In addition, the interconnection boards 320#9 to 320#12 can simultaneously converge powers output by output ends 312 of the power allocation units 310# 1 to 310#9. This helps increase power utilization of a power module 400 connected to the power allocation apparatus 300.

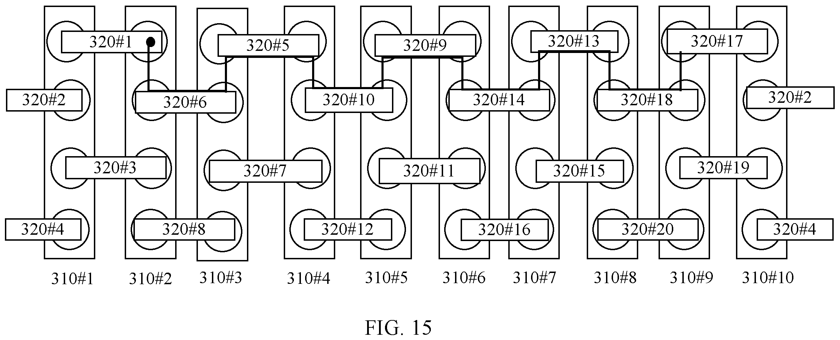

For another example, FIG. 15 is a diagram of a structure of another example of the power allocation apparatus 300 according to this embodiment of this application.

Refer to FIG. 15. For example, the power allocation apparatus 300 with interconnection boards shown in FIG. 12 still includes power allocation units 310#1 to 310#10 and interconnection boards 320#1 to 320#20, and the interconnection boards 320#1 to 320#20 are sequentially connected in a staggered manner. Any two output ends 312 of each power allocation unit in the power allocation units 310#1 to 310#10 are connected to each other through a first switch unit 330 (not shown in the figure).

Different from the example shown in FIG. 14, in the example shown in FIG. 15, that powers converged by the interconnection boards 320#6, 320#5, 320#10, 320#9, 320#14, 320#13, 320#18, and 320#17 are transmitted to the interconnection board 320#1 is used as an example. The interconnection board 320#17 may transmit a power output by an output end 312 of the power allocation unit 310#10 to the interconnection board 320#18, the interconnection board 320#18 may transmit powers output by output ends 312 of the power allocation units 310#9 and 310#10 to the interconnection board 320#13, ..., and the interconnection board 320#6 may transmit powers output by the output ends 312 of the power allocation units 310#3 to 310#10 to the interconnection board 320#1.

Therefore, the interconnection board 320#1 can simultaneously converge powers output by output ends 312 of the power allocation units 310#1 to 310#10, that is, the interconnection board 320#1 can schedule a power output by an output end 312 of each power allocation unit 310 in the power allocation apparatus 300, to meet different requirements for a charging power of the load 500.

During specific implementation, it is still assumed that a maximum power output by the power module 400 connected to the power allocation apparatus 300 to each input end 311 of each power allocation unit 310 is 40 kW. A maximum output power that is converged by the interconnection board 320#1 and then transmitted to an electric vehicle via a charging connector is 800 kW. This helps achieve a charging speed of one kilometer per second. In this way, a user can have charging experience of fully charging the vehicle after taking a coffee break.

The foregoing describes a specific example of implementing power transmission between different interconnection boards 320 through a first switch unit 330 disposed between any two output ends 312 of a same power allocation unit 310. The following further describes the first switch unit 330 provided in this embodiment of this application.

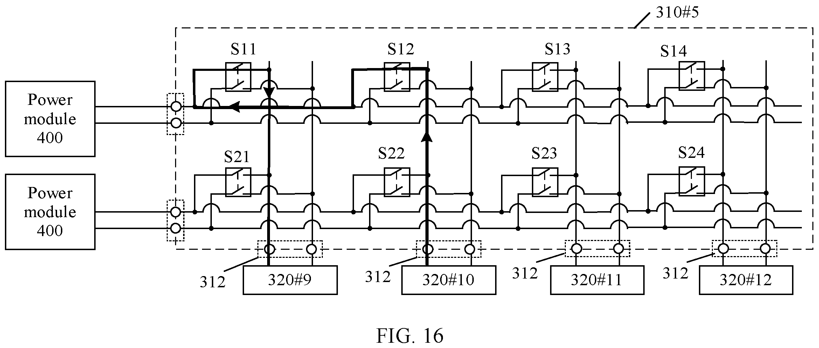

FIG. 16 is a schematic of a circuit structure of an example of a power allocation unit 310 according to this embodiment of this application.

In some embodiments, as shown in FIG. 16, the power allocation unit 310#5 shown in FIG. 15 is used as an example. A first switch unit 330 connected between any two output ends 312 may include two switch groups, and each switch group is connected between the any two output ends 312, to disconnect or connect a power transmission path between the any two output ends 312.

For example, a first switch unit 330 connected between a 1^{st} output end 312 and a 2^{nd} output end 312 includes two switch groups: a first switch group and a second switch group. The first switch group includes a switch S11 and a switch S12, and the 1^{st} output end 312 is connected to the 2^{nd} output end 312 through the switch S11 and the switch S12 in sequence. The second switch group includes switches S21 and S22, and the 1^{st} output end 312 is connected to the 2^{nd} output end 312 through the switch S21 and the switch S22 in sequence. Similarly, a first switch unit 330 connected between a 1^{st} output end 312 and a 3^{rd} output end 312 may include two switch groups, where one switch group includes a switch S11 and a switch S13, and the 1^{st} output end 312 is connected to the 3^{rd} output end 312 through the switch S11 and the switch S13 in sequence; and the other switch group includes switches S21 and S23, and the 1^{st} output end 312 is connected to the 3^{rd} output end 312 through the switch S21 and the switch S23 in sequence.

With reference to FIG. 15 and FIG. 16, a first switch unit 330 connected between a 1^{st} output end 312 and a 2^{nd} output end 312 of the power allocation unit 310#5 is used as an example. A first switch group in the first switch unit 330 is turned on, that is, a switch S11 and a switch S12 are turned on, to connect a power transmission path between the 1^{st} output end 312 and the 2^{nd} output end 312. In this case, a power that is output by a 2^{nd} output end 312 of the power allocation unit 310#4 and that is converged by the interconnection board 320#10 may be transmitted, through the switch S12 and the switch S11 in sequence, to the interconnection board 320#9 connected to a 1^{st} output end 312 of the power allocation unit 310#5 (as shown by thick arrows in FIG. 16). Therefore, the interconnection board 320#9 can simultaneously converge powers output by the output ends 312 of the power allocation units 310#4 to 310#6.

It may be understood that specific structure disposition of the first switch unit 330 is merely an example. In this embodiment of this application, a specific structure of the first switch unit 330 may be used as long as a power transmission path between any two output ends 312 connected to the first switch unit 330 can be disconnected or connected.

It may be further understood that, during specific implementation, a first switch unit 330 connected between any two output ends 312 is further configured to disconnect or connect a power transmission path between an input end 311 and the any two output ends 312.

For example, the first switch unit 330 connected between the 1^{st} output end 312 and the 2^{nd} output end 312 of the power allocation unit 310#5 is still used as an example. One end of the switch S11 and one end of the switch S12 in the first switch group are connected in parallel and then connected to a 1^{st} input end 311, the other end of the switch S11 is connected to the 1^{st} output end 312, and the other end of the switch S12 is connected to the 2^{nd} output end 312. Therefore, when the 1^{st} output end 312 is connected to the 2^{nd} output end 312 through the switch S11 and the switch S12, the 1^{st} output end 312 is further connected to the 1^{st} input end 311 through the switch S11, and the 2^{nd} output end 312 is further connected to the 1^{st} input end 311 through the switch S12.

Similarly, one end of S21 and one end of the switch S22 in the second switch group are connected in parallel and then connected to the 2^{nd} input end 311, the other end of the switch S21 is connected to the 1^{st} output end 312, and the other end of the switch S22 is connected to the 2^{nd} output end 312. Therefore, when the 1^{st} output end 312 is connected to the 2^{nd} output end 312 through the switch S21 and the switch S22, the 1^{st} output end 312 is further connected to the 2^{nd} input end 311 through the switch S21, and the 2^{nd} output end 312 is further connected to the 2^{nd} input end 311 through the switch S22. Therefore, each switch in the first switch unit 330 is turned off or turned on, so that a power that is output by the power module 400 and that is received by each input end 311 of the power allocation unit 310#5 can be allocated to the 1^{st} output end 312 or the 2^{nd} output end 312.

By analogy, each output end 312 and each input end 311 of the power allocation unit 310#5 may be connected through a switch in the first switch unit 330. Therefore, a power that is output by the power module 400 and that is received by each input end 311 of the power allocation unit 310#5 may be allocated to each output end 312.

In this embodiment of this application, each input end 311 of a same power allocation unit 310 may be further connected to each output end 312 through each switch in the first switch unit 330 disposed between any two output ends 312, to allocate, to each output end 312, a power that is output by the power module 400 and that is received by each input end 311 of the power allocation unit 310#5. Therefore, a switch component does not need to be separately disposed between each input end 311 and each output end 312 of the power allocation unit 310. This helps increase switch utilization of the first switch unit 330, and reduce a quantity of switches required by the power allocation apparatus 300, further reduces a volume of the power allocation apparatus 300, and reduces costs of the power allocation apparatus 300.

The power allocation apparatus 300 provided in this embodiment of this application is described above by using an example in which each input end 311 and each output end 312 of the power allocation unit 310 are connected to each other through a switch, and the power allocation apparatus 300 provided in this embodiment of this application is described below by using an example in which each input end 311 of the power allocation unit 310 mentioned above is further directly connected to at least some output ends 312 of the power allocation unit 310.

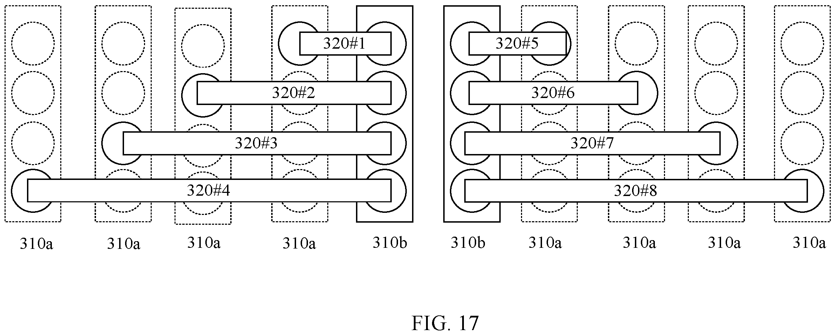

FIG. 17 is a diagram of a structure of another power allocation apparatus 300 according to an embodiment of this application.

Refer to FIG. 17. In the power allocation apparatus 300, a plurality of power allocation units 310 further include a first power allocation unit 310a. Each input end 311 of the first power allocation unit 310a is directly connected to at least some output ends 312 of a plurality of output ends 312 of the first power allocation unit 310a.

In this embodiment of this application, although each output end 312 of the first power allocation unit 310a may be configured to connect to a load 500, each input end of the first power allocation unit 310a is directly connected to at least some output ends 312. Therefore, the first power allocation unit 310a can output a power only from the at least some output ends 312. In addition, because a quantity of input ends is less than a quantity of output ends, each input end 311 cannot simultaneously allocate output powers to two output ends 312, to avoid a short circuit. Therefore, in an actual application, in the at least some output ends 312, a quantity of output ends that can output a power is less than a total quantity of output ends of the first power allocation unit 310a, that is, in an actual application, a quantity of output ends that can be connected to a load 500 is less than the total quantity of output ends of the power allocation unit 310a. Therefore, a quantity of output ends that of the first power allocation unit 310a and that are actually configured to connect to the load 500 is reduced.

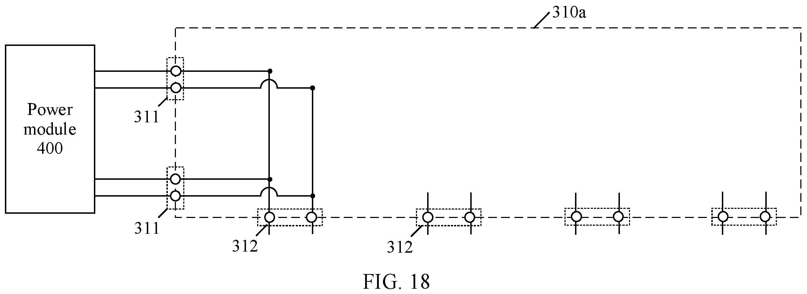

For example, FIG. 18 is a diagram of a structure of an example of the first power allocation unit 310a shown in FIG. 17 according to this embodiment of this application.

Refer to FIG. 18. That each input end 311 of the first power allocation unit 310a is directly connected to at least some output ends 312 of the first power allocation unit 310a includes: Each input end 311 of the first power allocation unit 310a is directly connected to one output end 312 of the first power allocation unit 310a, so that the first power allocation unit 310a outputs a power through the output end 312.

For example, the first power allocation unit 310a includes two input ends 311 and four output ends 312. When each input end 311 of the first power allocation unit 310 is directly connected to one output end 312, a quantity of output ends that are of the first power allocation unit 310 and that can be actually configured to connect to a load 500 is reduced from 4 to 1.

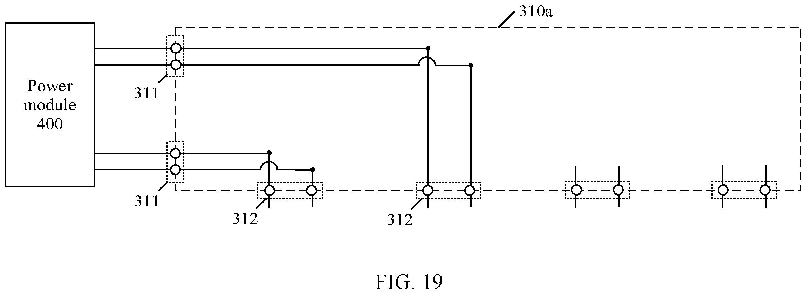

For another example, FIG. 19 is a diagram of a structure of another example of the first power allocation unit 310a shown in FIG. 17 according to this embodiment of this application.

Refer to FIG. 19. That each input end 311 of the first power allocation unit 310a is directly connected to at least some output ends 312 of the first power allocation unit 310a includes: Input ends 311 of the first power allocation unit 310a are directly one-to-one connected to output ends 312 of the first power allocation unit 310a, so that the first power allocation unit 310a outputs a power through an output end 312 correspondingly connected to each input end 311.

For example, the first power allocation unit 310a includes two input ends 311 and four output ends 312. When the input ends 311 of the first power allocation unit 310 are directly one-to-one connected to output ends 312, a quantity of output ends that are of the first power allocation unit 310 and that can be actually configured to connect to a load 500 is reduced from 4 to 2.

Still refer to FIG. 17. In addition to the first power allocation unit 310a, the plurality of power allocation units 310 further include a second power allocation unit 310b. Each input end 311 and each output end 312 of the second power allocation unit 310b are connected to each other through a switch. For example, each input end 311 is connected to each output end 312 through each switch in the first switch unit 330, or each input end 311 may be connected to each output end 312 through a separately disposed switch. Therefore, the second power allocation unit 310b may allocate, to each output end 312, a power that is output by the power module 400 and that is received by each input end 311. In other words, each output end 312 of the second power allocation unit 310 may be configured to connect to a load 500 in an actual application.

Therefore, in this embodiment of this application, some power allocation units 310 in the plurality of power allocation units 310 are disposed as the first power allocation units 310a, and the remaining power allocation units 310 are disposed as the second power allocation units 310b. This can reduce a quantity of output ends that are of the plurality of power allocation units 310 and that can be actually configured to connect to a load 500.

For example, the power allocation apparatus 300 shown in FIG. 17 includes 10 power allocation units 310, and each power allocation unit 310 includes two input ends 311 and four output ends 312. It is assumed that each output end 312 of each power allocation unit 310 can output a power, that is, it is assumed that each power allocation unit 310 is the second power allocation unit 310b. In this case, a maximum quantity of output ends that are of the 10 power allocation units 310 and that are actually configured to connect to a load 500 is 40.

If the 10 power allocation units 310 are set to include eight first power allocation units 310a (power allocation units shown in dashed-line boxes in the figure) and two second power allocation units 310b (power allocation units shown in solid-line boxes in the figure), each input end 311 of each first power allocation unit 310a is connected to one output end 312 of each power allocation unit 310a (an output end shown by a solid-line circle in each dashed-line box in the figure). Therefore, a quantity of output ends that are of each first power allocation unit 310a and that are actually configured to connect to a load 500 is 1. In this case, the quantity of output ends that are of the 10 power allocation units 310 and that are actually configured to connect to the load 500 is reduced from a maximum of 40 to 16.

Further, an output end 312, that is actually configured to connect to the load 500, of each first power allocation unit 310a is connected to an output end 312 of a second power allocation unit 310b through an interconnection board 320, and is connected to the load 500 through the interconnection board 320, so that the quantity of output ends that are of the 10 power allocation units 310 and that are actually configured to connect to the load 500 can be further reduced.

For example, still refer to FIG. 17. The power allocation apparatus 300 further includes eight interconnection boards 320. An output end 312, that is actually configured to connect to a load 500, of each of the eight first power allocation units 310a is connected to one output end 312 of a second power allocation unit 310b through one interconnection board 320, to further reduce the quantity of output ends that are of the 10 power allocation units 310 and that are actually configured to connect to the load 500 from 16 to 8. This helps meet a reduced demand for the output end of the power allocation apparatus 300.

It is assumed that a power output by the power module 400 to each input end 311 of each power allocation unit 310 is 40 kW. A maximum power that can be converged by each interconnection board 320 is 160 kW, that is, a maximum output power that is converged by each interconnection board 320 and then transmitted to a load 500 is 160 kW.

It may be understood that, when the 10 power allocation units 310a are not disposed as first power allocation units 310, that is, all the 10 power allocation units 310 are second power allocation units 310b, if the quantity of output ends that are of the 10 power allocation units 310 and that are actually configured to connect to the load 500 needs to be reduced to 8, and a maximum output power of each output end 312 is 160 kW, output ends 312 of four power allocation units 310 are usually connected through eight interconnection boards 320 as shown in FIG. 10, to serve as the output ends that are actually configured to connect to the load 500. However, in an actual application, the remaining six power allocation units 310 are in an idle state, and switch utilization of the six power allocation units 310 is low. This is not conducive to reducing costs of the power allocation apparatus 300. If the remaining six power allocation units 310 are not disposed in the power allocation apparatus 300, correspondingly, no power module 400 correspondingly connected to the six power allocation units 310 is disposed. As a result, an entire power of the power module 400 connected to the power allocation apparatus 300 is reduced.

However, in the power allocation apparatus 300 provided in this embodiment of this application, in a case in which a quantity of power allocation units 310 in the power allocation apparatus 300 is not reduced, that is, an entire power of the power module 400 connected to the power allocation apparatus 300 remains unchanged, the quantity of output ends that are actually configured to connect to the load 500, of the plurality of power allocation units 310 may be reduced by adjusting a quantity of first power allocation units 310a and a quantity of second power allocation units 310b, so that the quantity of output ends that are of the power allocation apparatus 300 and that are actually configured to connect to the load 500 meets a small demand for the output end.

In addition, compared with an allocation matrix architecture in which each input end 311 and each output end 312 of each power allocation unit 310 in the power allocation apparatus 300 are connected to each other through a switch, in the foregoing technical solution, no switch needs to be disposed between each input end 311 and each output end 312 of the first power allocation unit 310a in the power allocation apparatus 300. This can reduce a quantity of required switches in the power allocation apparatus 300, further reduces a volume of the power allocation apparatus 300, and reduces costs of the power allocation apparatus 300.

It should be noted that this embodiment of this application is described by using an example in which quantities of a plurality of output ends 312 of all of the plurality of power allocation units 310 in the power allocation apparatus 300 are the same. In this embodiment of this application, the quantities of the plurality of output ends 312 of all the power allocation units 310 are set to be the same. This facilitates a modular design of the plurality of power allocation units 310, and further reduces complexity of designing the power allocation apparatus 300. In some other embodiments, the quantities of the plurality of output ends 312 of all of the plurality of power allocation units 310 may alternatively be different.

In addition, during specific implementation, in some embodiments, rated output powers of at least some output ends 312 that are directly connected to each input end 311 and that are in the plurality of output ends 312 of the first power allocation unit 310a are the same.

In this embodiment of this application, that the rated output powers of the at least some output ends 312 are the same may mean that maximum output powers allocated to all of the at least some output ends 312 are the same after the first power allocation unit 310a receives a power output by the power module 400. Therefore, in an actual application, the first power allocation unit 310a may be controlled to output the same power to a load 500 through any output end 312 in the at least some output ends 312, and the control is simple and reliable.

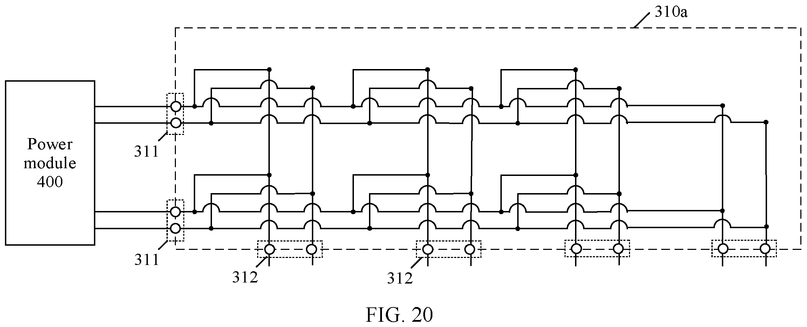

For example, FIG. 20 is a diagram of a structure of an example of a first power allocation unit 310a that can implement a same rated output power of at least some output ends 312 directly connected to each input end 311 according to this embodiment of this application.

Refer to FIG. 20. That each input end 311 of the first power allocation unit 310a is directly connected to at least some output ends 312 of the first power allocation unit 310a includes: Each input end 311 of the first power allocation unit 310a is directly connected to each output end 312 of the first power allocation unit 310a. In addition, during specific implementation, rated output powers of all of the plurality of output ends 312 of the first power allocation unit 310a are the same. Therefore, after receiving a power output by the power module 400, the first power allocation unit 310a may allocate the power to any output end 312, and maximum output powers allocated to all of the output ends 312 are the same.

In this embodiment of this application, each input end 311 of the first power allocation unit 310a is directly connected to each output end 312 of the first power allocation unit 310a, so that each output end 312 can output a power. In addition, after the first power allocation unit 310a receives the power output by the power module 400, maximum output powers allocated to all of the at least some output ends 312 of the first power allocation unit 310a are the same. Therefore, in an actual application, the first power allocation unit 310a may be controlled to output the same maximum power to a load 500 through any output end 312, and the control is simpler and more reliable. In addition, each input end 311 and each output end 312 of the first power allocation unit 310a are directly connected to each other, so that, in an actual application, a maximum output power output by any output end 312 to a load 500 is high. This helps meet a requirement of fast charging the load 500. In addition, when an output end 312 of the first power allocation unit 310a needs to be connected to an output end 312 of another power allocation unit 310 through an interconnection board 320, for example, connected to an output end 312 of the second power allocation unit 310b, any specified output end 312 of the first power allocation unit 310a may be selected, based on a location of the output end 312 of the another power allocation unit 310, to connect to the interconnection board 320. This facilitates a normalized design of the interconnection board 320.

The foregoing describes a specific structure of the first power allocation unit 310a in the plurality of power allocation units 310 provided in this embodiment of this application. The following describes the foregoing specific example in which the quantity of output ends that are of the plurality of power allocation units 310 and that are actually configured to connect to the load 500 is reduced by adjusting the quantity of first power allocation units 310a and the quantity of second power allocation units 310b in the plurality of power allocation units 310.

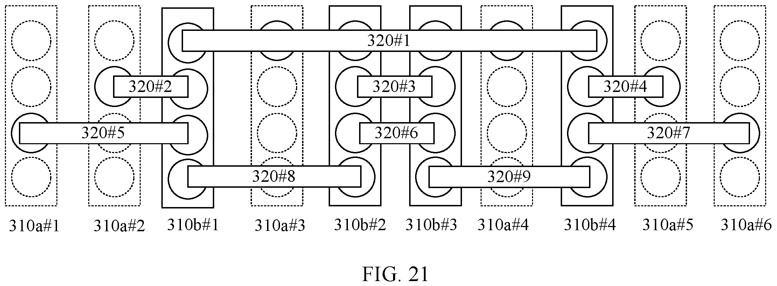

FIG. 21 is a diagram of a structure of an example of a power allocation apparatus 300 according to this embodiment of this application.

As shown in FIG. 21, the power allocation apparatus 300 includes 10 power allocation units 310 and nine interconnection boards 320, and each power allocation unit 310 includes two input ends 311 and four output ends 312. The 10 power allocation units 310 include six first power allocation units 310a and four second power allocation units 310b, in other words, the 10 power allocation units 310 include first power allocation units 310a#1 to 310a#6 (power allocation units shown in dashed-line boxes in the figure), second power allocation units 310b#1 to 310b#4 (power allocation units shown in solid-line boxes in the figure), and interconnection boards 320#1 to 320#9.

Each input end 311 of each first power allocation unit 310a is connected to each output end 312 of each first power allocation unit 310a, that is, each first power allocation unit 310a outputs a power through any output end 312 in an actual application. In the example shown in FIG. 21, in an actual application, each first power allocation unit 310a outputs a power through an output end 312 shown by the solid-line circle in the dashed box in the figure. For example, the first power allocation unit 310a#1 outputs a power through a 3^{rd} output end 312 in an actual application, and the first power allocation unit 310a#2 outputs a power through a 2^{nd} output end 312 in an actual application.

The interconnection board 320#1 is separately connected to 1^{st} output ends 312 of the first power allocation units 310a#3 and 310a#4 and the second power allocation units 310b#1 to 310b#4, the interconnection board 320#2 is separately connected to 2^{nd} output ends 312 of the first power allocation unit 310a#2 and the second power allocation unit 310b#1, ..., and specific connection of other interconnection boards 320 is shown in FIG. 21.

It is assumed that a power output by a power module 400 to each input end 311 of each power allocation unit 310 is 40 kW. A maximum power that can be converged by the interconnection board 320#1 is 480 kW, and a maximum power that can be converged by the interconnection boards 320#2 to 320#9 is 160 kW, that is, the maximum output power that is converged by the interconnection board 320#1 and then transmitted to a load 500 is 480 kW, and the maximum output power that is converged by the interconnection boards 320#2 to 320#9 and then transmitted to a load 500 is 160 kW.

Therefore, the foregoing 10 power allocation units 310 are disposed as six first power allocation units 310a and four second power allocation units 310b, and the 10 power allocation units 310 are connected to the nine interconnection boards 320, so that a quantity of output ends that are of the 10 power allocation units 310 and that are actually configured to connect to a load 500 can be adjusted from a maximum of 40 to 9, and the nine output ends include eight fast charging output ends and one ultra-fast charging output end. Therefore, the quantity of output ends that are of the power allocation apparatus 300 and that are actually configured to connect to the load 500 can meet a small demand for the output end, different requirements for a charging power of the load 500 can be met, and flexibility of allocating the output power to the load 500 by the power allocation apparatus 300 is improved.

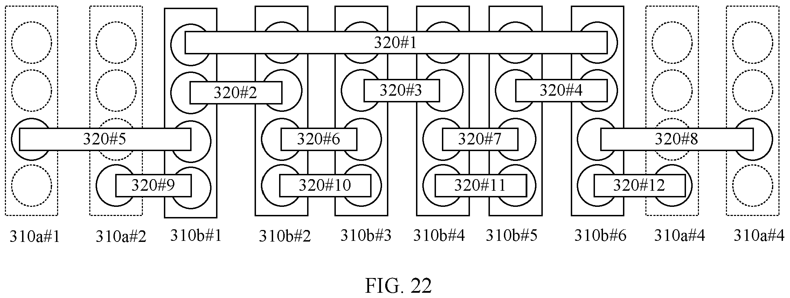

FIG. 22 is a diagram of a structure of another example of the power allocation apparatus 300 according to this embodiment of this application.

Refer to FIG. 22. Different from the example shown in FIG. 21, the power allocation apparatus 300 includes 10 power allocation units 310 and 12 interconnection boards 320, where the 10 power allocation units 310 include four first power allocation units 310a and six second power allocation units 310b, in other words, the 10 power allocation units 310 include first power allocation units 310a#1 to 310a#4 (power allocation units shown in dashed-line boxes in the figure), second power allocation units 310b#1 to 310b#6 (power allocation units shown in solid-line boxes in the figure), and interconnection boards 320#1 to 320#12.

The interconnection board 320#1 is separately connected to 1^{st} output ends 312 of the second power allocation units 310b#1 to 310b#6, the interconnection board 320#2 is separately connected to 2^{nd} output ends 312 of the second power allocation units 310b#1 and 310b#2, ..., and specific connection of other interconnection boards 320 is shown in FIG. 22.

It is still assumed that a power output by a power module 400 to each input end 311 of each power allocation unit 310 is 40 kW. A maximum output power that is converged by the interconnection board 320#1 and then transmitted to a load 500 is 480 kW, and a maximum output power that is converged by the interconnection boards 320#2 to 320#12 and then transmitted to a load 500 is 160 kW.

Therefore, the foregoing 10 power allocation units are disposed as four first power allocation units 310a and six second power allocation units 310b, and the 10 power allocation units 310 are connected to the 12 interconnection boards 320, so that a quantity of output ends that are of the 10 power allocation units 310 and that are actually configured to connect to a load 500 can be adjusted from a maximum of 40 to 12, and the 12 output ends include 11 fast charging output ends and one ultra-fast charging output end. Therefore, the quantity of output ends that are of the power allocation apparatus 300 and that are actually configured to connect to the load 500 can meet a small demand for the output end, different requirements for a charging power of the load 500 can be met, and flexibility of allocating the output power to the load 500 by the power allocation apparatus 300 is improved.

The foregoing describes a specific example in which the quantity of output ends that are of the plurality of power allocation units 310 and that are actually configured to connect to the load 500 is flexibly reduced by adjusting a quantity of first power allocation units 310a in the plurality of power allocation units 310.

It may be understood that, during specific implementation, because an input end 311 and an output end 312 of a first power allocation unit 310a are directly connected, in a process in which the first power allocation unit 310a transmits a power to a load 500 through an interconnection board 320, if an exception occurs, for example, the load is short-circuited, the first power allocation unit 310a cannot disconnect, in a timely manner, a power transmission path for transmitting the power to the load 500, which may cause a security problem. Therefore, the power allocation apparatus 300 may further disconnect, through a disposed second switch unit, the power transmission path for transmitting the power to the load 500 by the first power allocation unit 310a, to improve security.

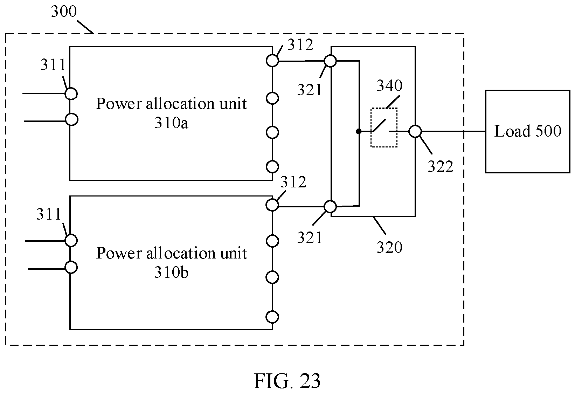

Specifically, in some embodiments, FIG. 23 is a diagram of a structure of a power allocation apparatus 300 according to an embodiment of this application. Refer to FIG. 23, the power allocation apparatus 300 further includes a second switch unit 340. At least some output ends 312 of a first power allocation unit 310a are configured to connect to a load 500 through an interconnection board 320, and at least two interconnection board input ends 321 of the interconnection board 320 connected to the first power allocation unit 310a are connected to an interconnection board output end 322 through the second switch unit 340. The second switch unit 340 is configured to disconnect or connect a power transmission path between the interconnection board output end 322 and the at least two interconnection board input ends 321 of the interconnection board 320 connected to the first power allocation unit 310a.

In this embodiment of this application, when an exception occurs when the first power allocation unit 310a transmits the power to the load 500 through the interconnection board 320, for example, the load is short-circuited, or a power module 400 connected to the first power allocation unit 310a is short-circuited, the power transmission path between the interconnection board input end 321 and the interconnection board output end 322 is disconnected through the second switch unit, to disconnect a power transmission path between the first power allocation unit 310a and the load 500. This helps improve security and reliability of the power allocation apparatus 300.

The foregoing describes the power allocation apparatus provided in embodiments of this application. The following describes, with reference to accompanying drawings, a charging device that includes the power allocation apparatus and that is provided in embodiments of this application.

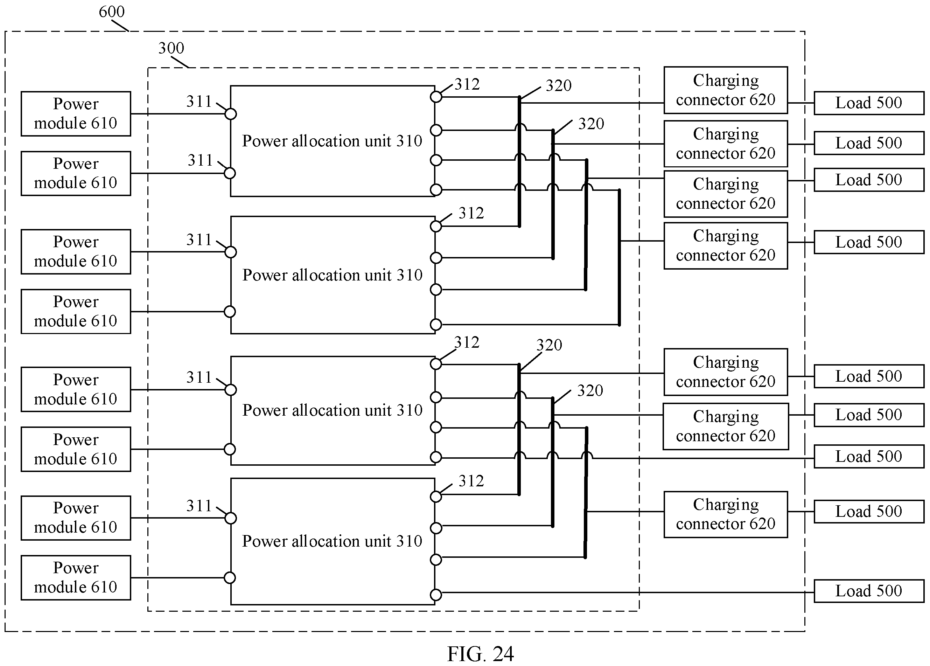

FIG. 24 is a diagram of a structure of a charging device 600 according to an embodiment of this application.

Refer to FIG. 24. The charging device 600 may include a power module 610 and the power allocation apparatus 300 described in the foregoing embodiments. The power allocation apparatus 300 includes a plurality of power allocation units 310 and at least one interconnection board 320. Each power allocation unit 310 includes at least one input end 311 and a plurality of output ends 312, each input end 311 is connected to the power module 610, and the plurality of output ends 312 are configured to connect to a load 500 or an interconnection board 320. Each power allocation unit 310 is configured to transmit, to a load 500 or an interconnection board 320, a power output by the power module 610.

It may be understood that the power module 610 may be the power module 400 described in the foregoing embodiment. For specific descriptions about connection between the power module 610 and the power allocation apparatus 300, refer to related descriptions in the foregoing embodiment. Details are not described herein again.

In some embodiments, with reference to FIG. 6 and FIG. 24, the charging device 600 may further include at least one charging connector 620. Each interconnection board 320 includes at least two interconnection board input ends 321 and one interconnection board output end 322. The at least two interconnection board input ends 321 one-to-one correspond to at least two power allocation units 310 in the plurality of power allocation units 310 in the power allocation apparatus 300, each interconnection board input end 321 is connected to one output end 312 of the corresponding power allocation unit 310, and the interconnection board output end 322 is configured to connect to a load 500 through a charging connector 620.

For example, in an example, the charging device 600 may include a charging power unit and at least one charging terminal connected to the charging power unit (not shown in the figure). The at least one charging terminal is connected to the at least one charging connector 620. The power allocation apparatus 300 is disposed in the charging power unit, and is connected to the charging connector 620 through the charging terminal. In other words, the charging device 600 may be a separated charging pile shown in (a) in FIG. 1. In another example, the charging device 600 may include a charging power unit (not shown in the figure). The power allocation apparatus 300 is disposed in the charging power unit, and is connected to the at least one charging connector 620 through the charging power unit. In other words, the charging device 600 may be an integrated charging pile shown in (b) in FIG. 1. For specific descriptions, refer to the embodiment shown in FIG. 1. Details are not described herein again.

It may be understood that, during specific implementation, an output end 312 that is of the power allocation unit 310 and that is not connected to an interconnection board 320 may also be directly connected to a load 500 through a charging connector 620.

For a part, that is not described in detail, of the charging device 600, refer to related descriptions in the foregoing embodiment. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power allocation apparatus, wherein the power allocation apparatus comprises a plurality of power allocation units and at least one interconnection board;
the power allocation unit comprises at least one input end and a plurality of output ends, the input end is configured to connect to a power module, and at least some output ends in the plurality of output ends are configured to connect to an interconnection board; and
the interconnection board is connected to output ends of at least two power allocation units in the plurality of power allocation units, and the interconnection board is configured to converge powers output by the output ends of the at least two power allocation units.

2. The power allocation apparatus according to claim 1, wherein the interconnection board comprises at least two interconnection board input ends and one interconnection board output end; and
the at least two interconnection board input ends one-to-one correspond to the at least two power allocation units, the interconnection board input end is connected to one output end of the corresponding power allocation unit, and the interconnection board output end is configured to connect to a load.

3. The power allocation apparatus according to claim 1 or 2, wherein the at least one interconnection board comprises a plurality of interconnection boards; and
at least two interconnection boards in the plurality of interconnection boards are one-to-one connected to at least two output ends of one of the power allocation units, and each of the at least two interconnection boards is further connected to an output end of a power allocation unit other than the one power allocation unit in the plurality of power allocation units.

4. The power allocation apparatus according to claim 3, wherein the power allocation apparatus further comprises a first switch unit;
any two output ends in the at least two output ends are connected to each other through the first switch unit; and
the first switch unit is configured to disconnect or connect a power transmission path between two interconnection boards connected to the any two output ends.

5. The power allocation apparatus according to any one of claims 2 to 4, wherein the plurality of power allocation units comprise a first power allocation unit; and
each input end of the first power allocation unit is directly connected to at least some output ends of the first power allocation unit.

6. The power allocation apparatus according to claim 5, wherein all of the plurality of power allocation units have a same quantity of a plurality of output ends.

7. The power allocation apparatus according to claim 5 or 6, wherein the power allocation apparatus further comprises a second switch unit;
the at least some output ends of the first power allocation unit are configured to connect to the load through the interconnection board, and the at least two interconnection board input ends of the interconnection board connected to the first power allocation unit are connected to the interconnection board output end through the second switch unit; and
the second switch unit is configured to disconnect or connect a power transmission path between the interconnection board output end and the at least two interconnection board input ends of the interconnection board connected to the first power allocation unit.

8. A charging device, wherein the charging device comprises a power module and a power allocation apparatus, and the power allocation apparatus comprises a plurality of power allocation units and at least one interconnection board;
the power allocation unit comprises at least one input end and a plurality of output ends, the input end is connected to the power module, and at least some output ends in the plurality of output ends are configured to connect to an interconnection board; and
the interconnection board is connected to output ends of at least two power allocation units in the plurality of power allocation units, and the interconnection board is configured to converge powers output by the output ends of the at least two power allocation units.

9. The charging device according to claim 8, wherein the charging device further comprises at least one charging connector, and the interconnection board comprises at least two interconnection board input ends and one interconnection board output end; and
the at least two interconnection board input ends one-to-one correspond to the at least two power allocation units, the interconnection board input end is connected to one output end of the corresponding power allocation unit, and the interconnection board output end is configured to connect to a load through the charging connector.

10. The charging device according to claim 8 or 9, wherein the at least one interconnection board comprises a plurality of interconnection boards; and
at least two interconnection boards in the plurality of interconnection boards are one-to-one connected to at least two output ends of one of the power allocation units, and each of the at least two interconnection boards is further connected to an output end of a power allocation unit other than the one power allocation unit in the plurality of power allocation units.

11. The charging device according to claim 10, wherein the power allocation apparatus further comprises a first switch unit;
any two output ends in the at least two output ends are connected to each other through the first switch unit; and
the first switch unit is configured to disconnect or connect a power transmission path between two interconnection boards connected to the any two output ends.

12. The charging device according to any one of claims 9 to 11, wherein the plurality of power allocation units comprise a first power allocation unit; and
each input end of the first power allocation unit is directly connected to at least some output ends of the first power allocation unit.

13. The charging device according to claim 12, wherein all of the plurality of power allocation units have a same quantity of a plurality of output ends; and
rated output powers of the at least some output ends in the plurality of output ends of the first power allocation unit are the same.

14. The charging device according to claim 13, wherein that each input end of the first power allocation unit is directly connected to at least some output ends of the first power allocation unit comprises:
each input end of the first power allocation unit is directly connected to each output end of the first power allocation unit, and rated output powers of all of the plurality of output ends of the first power allocation unit are the same.

15. The charging device according to any one of claims 12 to 14, wherein the power allocation apparatus further comprises a second switch unit;
the at least some output ends of the first power allocation unit are connected to the charging connector through the interconnection board, and the at least two interconnection board input ends of the interconnection board connected to the first power allocation unit are connected to the interconnection board output end through the second switch unit; and
the second switch unit is configured to disconnect or connect a power transmission path between the interconnection board output end and the at least two interconnection board input ends of the interconnection board connected to the first power allocation unit.
